(19) Europäisches Patentamt
European Patent Office
Office européen des brevets

(11) Publication number: 0 149 158 B1

(12) # EUROPEAN PATENT SPECIFICATION

(45) Date of publication of patent specification: 21.06.89

(51) Int. Cl.[4]: C 09 B 45/16, G 03 C 5/54

(21) Application number: 84115502.1

(22) Date of filing: 15.12.84

(54) **Novel chrome-complexed compounds and photographic system.**

(30) Priority: 21.12.83 US 564016
21.12.83 US 564005
26.09.84 US 654774
26.09.84 US 654775

(43) Date of publication of application:
24.07.85 Bulletin 85/30

(45) Publication of the grant of the patent:
21.06.89 Bulletin 89/25

(84) Designated Contracting States:
DE FR GB NL

(56) References cited:
EP-A-0 044 937
EP-A-0 092 923
FR-A-1 220 724
FR-A-1 263 830
FR-A-2 340 355

(73) Proprietor: POLAROID CORPORATION
549 Technology Square
Cambridge, Massachusetts 02139 (US)

(72) Inventor: King, Patrick F.
11 Holyoke Street
No.Quincy, MA 02171 (US)
Inventor: Stroud, Stephen G.
8 Wadsworth Street
Allston, MA 02134 (US)

(74) Representative: Reitzner, Bruno, Dr. et al
Patentanwälte Dipl.-Ing. R. Splanemann Dr. B.
Reitzner Tal 13
D-8000 München 2 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 149 158 B1

Courier Press, Leamington Spa, England.

## Description

This invention relates to novel chrome-complex compounds which are useful as dyes and as intermediates in the preparation of image dye providing materials which are useful in photography. Furher, the invention relates to photosensitive elements, diffusion transfer film units and diffusion transfer processes which utilize the aforesaid and similar image dye providing materials.

Black image dye-providing materials can be used in diffusion transfer photography to form black and white images. The use of such materials to form the image can provide a number of advantages over processes where the image is formed by silver including image stability and the tone of the image.

In particular, the invention relates to compounds represented by the formula

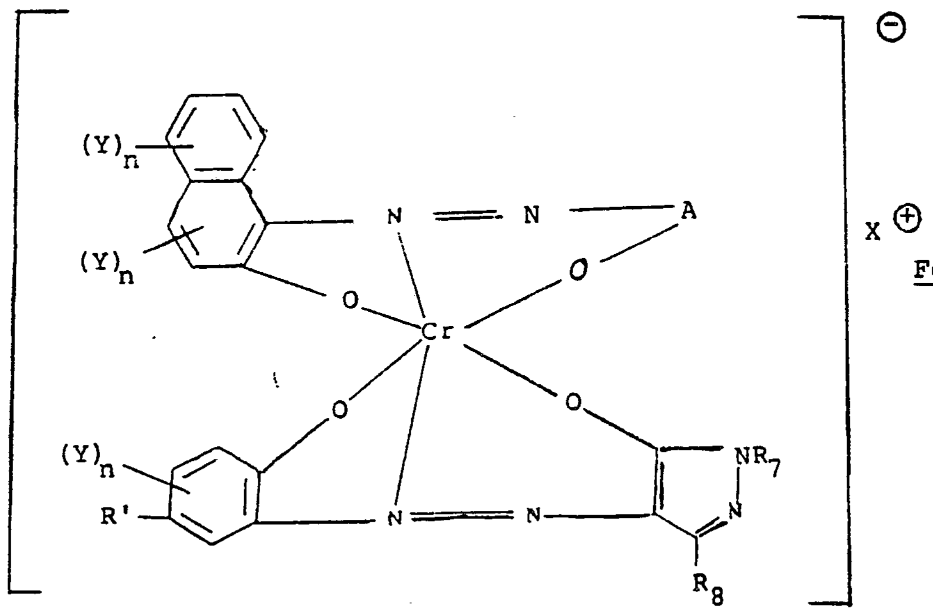

Formula A

wherein

A is

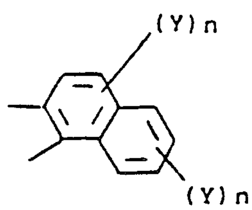

or

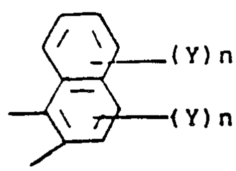

R′ is hydrogen —$NO_2$, —$SO_3H$ or —$SO_2NR''R'''$; R″ and R‴ are the same or different and each is hydrogen, alkyl, phenyl, or alkyl or phenyl substituted with (Y)n;

$R_7$ and $R_8$ are the same or different and each is hydrogen, alkyl, phenyl or (Y)n;

Y is a substituent including at least one diffusion control moiety, Z, selected from the group consisting of a hydroquinonyl silver halide developing moiėty, a coupling phenol or naphthol moiety having an available coupling position para to the hydroxyl group, a sulfonamidophenol group which will cleave or ring close following oxidation and a thiazolidine group which is capable of silver-catalyzed cleavage;

n is 0 or 1, provided that at least one n is 1; and

X is a cation.

It should be noted that the naphthyl moieties may be substituted in any of the available positions with substituents which may be, for example, electron withdrawing groups such as cyano, acetyl, nitro, sulfonic acid, sulfones, sulfonamido, etc. or electron donating groups such as alkyl, methoxy, amino, etc. The p-substituted phenyl and pyrazolone moieties may also be substituted in any of the available positions in like manner.

In the compound represented by Formula A, R″ and R‴ may be alkyl groups having from 1 to 6 carbon atoms and may also include alkyl or phenyl groups with subsituents other than Y; $R_7$ and $R_8$ may be alkyl groups having from 1 to 6 carbon atoms. The alkyl and phenyl groups may also be substituted with any photographically acceptable substituents other than Y.

It will be noted that A may be attached to the nitrogen and oxygen atoms in the 2-azo-1-hydroxy positions, or in the 1-azo-2-hydroxy positions.

In such image dye-providing compounds, the diffusion control substituent, Y, may be represented by

—E—Dev

where Dev is a hydroquinonyl group or a precursor thereof and E is a covalent bond or a divalent linking group such as, for example, alkylene.

Image dye-providing materials within Formula A as a function of the particular diffusion control moiety, Z, which is present, are suitable for use in diffusion transfer processes employing either initially diffusible or initially nondiffusible image dye-providing materials. Typical suitable diffusion control moieties include, for example, hydroquinonyl groups, coupling groups, sulfonamido phenol groups which cleave or ring close following oxidation to release a diffusible dye or dye intermediate, thiazolidine groups whose cleavage is silver catalyzed, and others such as those disclosed in Dye Diffusion Systems in Color Photography, Van de Sande, Angew, Chem. Int. Ed. Engl. 22 (1983), pp 191—209.

The diffusion control moiety, Z, may be attached by a covalent bond or a divalent organic radical, for example, an alkylene radical to complete the diffusion control substituent Y. Further where the image dye-providing material is initially diffusible a suitable ballast group, for example, a long chain alkyl group, may be attached to the diffusion control moiety.

The invention also relates to a photosensitive element comprising a support, a silver halide emulsion in a layer carried by said support, and an image dye-providing material in a layer carried by said support on the same side thereof as said silver halide emulsion, said image dye-providing material being capable of providing an image dye containing the chromophoric system represented by the formula

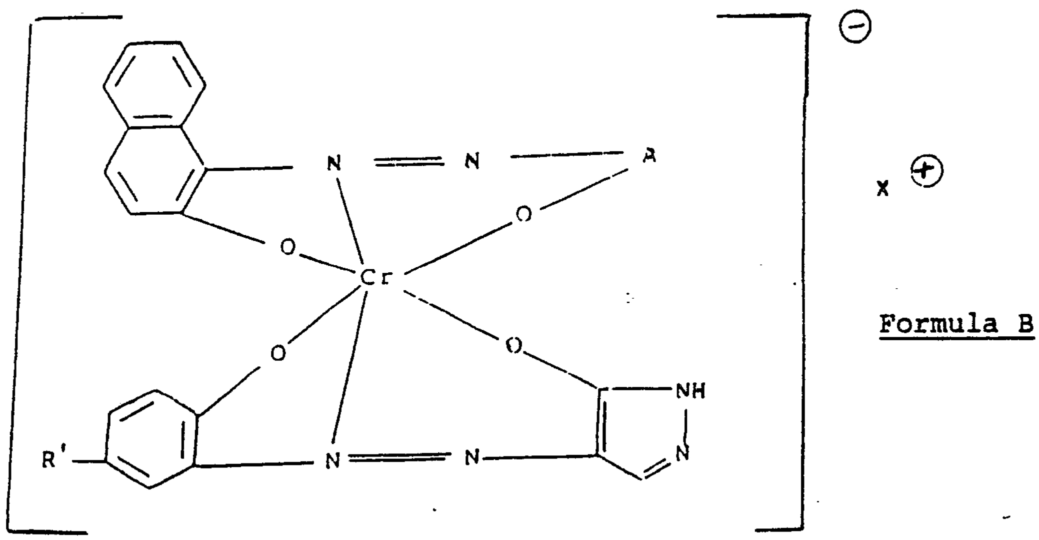

Formula B

wherein

A is

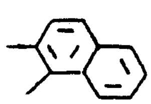

or

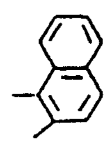

R′ is hydrogen, $-NO_2$, $-SO_3H$ or $-SO_2NH''R'''$; R″ and R‴ are the same or different and each is hydrogen, alkyl, substituted alkyl, aryl or substituted aryl; and

X is a cation.

Again, R′, R″ and R‴ may be alkyl having from 1 to 6 carbon atoms.

The chromophoric system represented by Formula B may be modified by a chromophoric system represented by the Formula

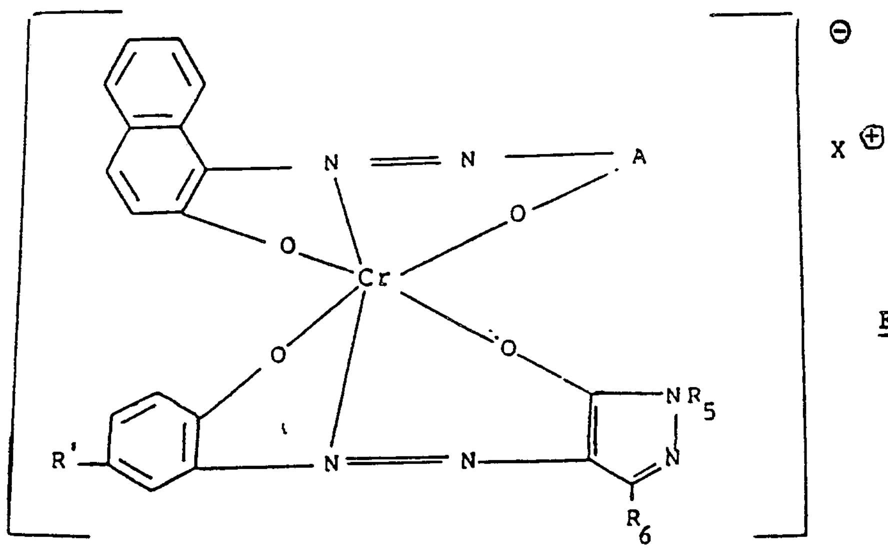

Formula C

wherein $R_5$ and $R_6$ are the same or different and each is hydrogen, alkyl, preferably having from 1 to 6 carbon atoms, aryl such as phenyl, or alkyl or aryl substituted with any photographically acceptable substituents such as those described above.

In the photosensitive elements, the image dye providing material is a compound represented by the Formula

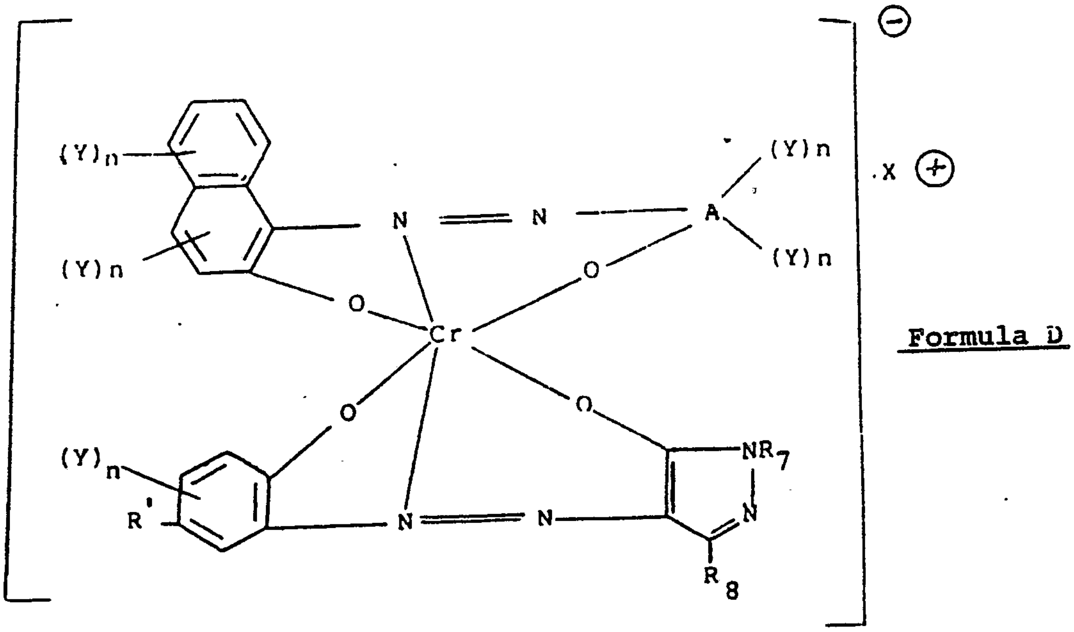

Formula D

wherein $R_7$ and $R_8$ are the same or different and each is hydrogen, alkyl, substituted alkyl, aryl, substituted aryl or (Y)n, Y is a substituent including at least one diffusion control moiety, and n is 0 or 1, provided that at least one n is 1.

In Formula D, the diffusion control moiety may be selected from the group consisting of a hydroquinonyl silver halide developing moiety, a coupling phenol or naphthol moiety having an available coupling position para to the hydroxyl group, a sulfonamidophenol group which will cleave or ring close following oxidation and a thiazolidine group which is capable of silver-catalyzed cleavage.

In a preferred photosensitive element, R′ in Formula B may be $-NO_2$.

A particularly preferred image dye providing material is represented by the Formula

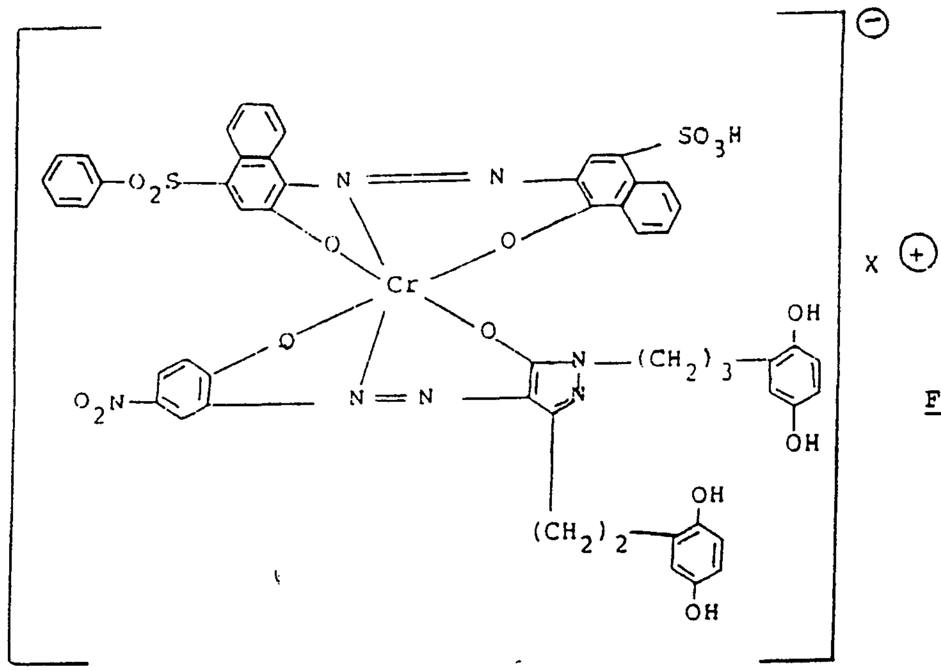

Formula E

where X is a cation.

The invention also relates to a diffusion transfer film unit comprising

(a) a photosensitive element as defined above;

(b) a second sheet-like element adapted to be superposed on said photosensitive element prior to during or after photoexposure;

(c) an image receiving layer positioned in one of said photosensitive or second sheet-like element; and

(d) a rupturable container releasably holding an aqueous alkaline processing composition and so positioned as to be adapted to distribute said processing composition between predetermined layers and said elements.

In particular, the image dye-providing material represented by the Formula D is capable of providing an image dye containing the chromophoric system represented by Formula C. A particularly preferred diffusion transfer film unit includes an image dye-providing material represented by Formula E.

Finally, the invention relates to a diffusion transfer process comprising

(a) imagewise exposing a photosensitive element as defined above;

(b) developing said exposed photosensitive element with an aqueous alkaline processing composition;

(c) forming an imagewise distribution of said diffusible image dye from said image dye-providing material as a function of development; and

(d) transferring at least a portion of said imagewise distribution of said diffusible image dye to an image receiving layer arranged in superposed relationship with said silver halide emulsion to provide a diffusion transfer dye image.

The image dye-providing material used in the diffusion transfer process according to the invention is a compound represented by Formula D wherein this material is capable of providing a diffusible image dye containing the chromophoric system represented by Formula C.

It has been found that images formed with the preferred image dye-providing materials of the invention exhibit very good light stability and the ability to fade evenly across the visible spectrum.

The image dye-providing materials of the invention include a diffusion transfer control moiety such as a hydroquinonyl group or a precursor thereof and may be diffusible or nondiffusible as a function of the diffusion control moiety.

In the photographic diffusion transfer processes of the invention the desired image is obtained by processing an exposed photosensitive silver halide material with a processing composition distributed between two sheet-like elements, one of said elements including said photosensitive material. The processing composition is so applied and confined within and between the two sheet-like elements as not to contact or wet outer surfaces of the superposed elements, thus providing a film unit or film packet whose outer surfaces are dry. The processing composition may be viscous or nonviscous and preferably is distributed from a single use container; such pressure rupturable processing composition containers are commonly referred to as "pods". The final image may be monochrome or multicolor and is formed in an image receiving layer included in one of said sheet-like elements.

As is well known in diffusion transfer photography the image dye-providing materials which may be utilized in such processing generally may be characterized as either (1) initially soluble or diffusible in the

processing composition but which are selectively rendered nondiffusible imagewise as a function of development; or (2) initially insoluble or nondiffusible in the processing composition but which selectively provide a diffusible product imagewise as a function of development. The image dye-providing materials of the invention may be complete dyes or dye intermediates, e.g., couplers. The requisite differential in mobility or solubility may be obtained, for example, by a chemical reaction such as a redox reaction, a coupling reaction or a cleavage reaction.

For a better understanding of the invention as well as other objects and further features thereof, reference is made to the following detailed description of various preferred embodiments thereof taken in conjunction with the accompanying drawing wherein:

Fig. 1 shows the reflection absorption spectrum of one of the preferred image dye-providing materials of the invention; and

Fig. 2 graphically illustrates light stability data obtained for a transparency formed in Example XVI.

Specific image dyes which are formed in the photographic products of the present invention are represented by the Formulas

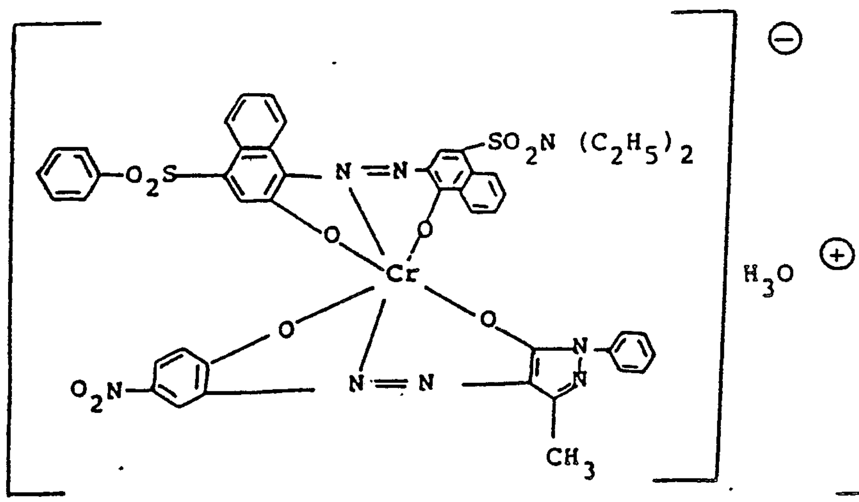

I

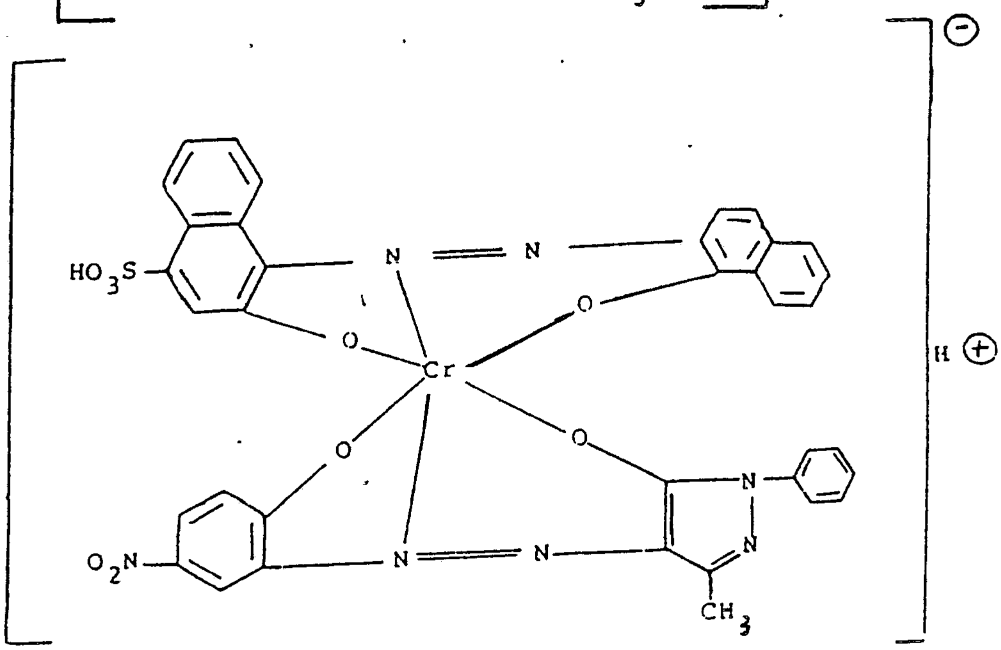

(II)

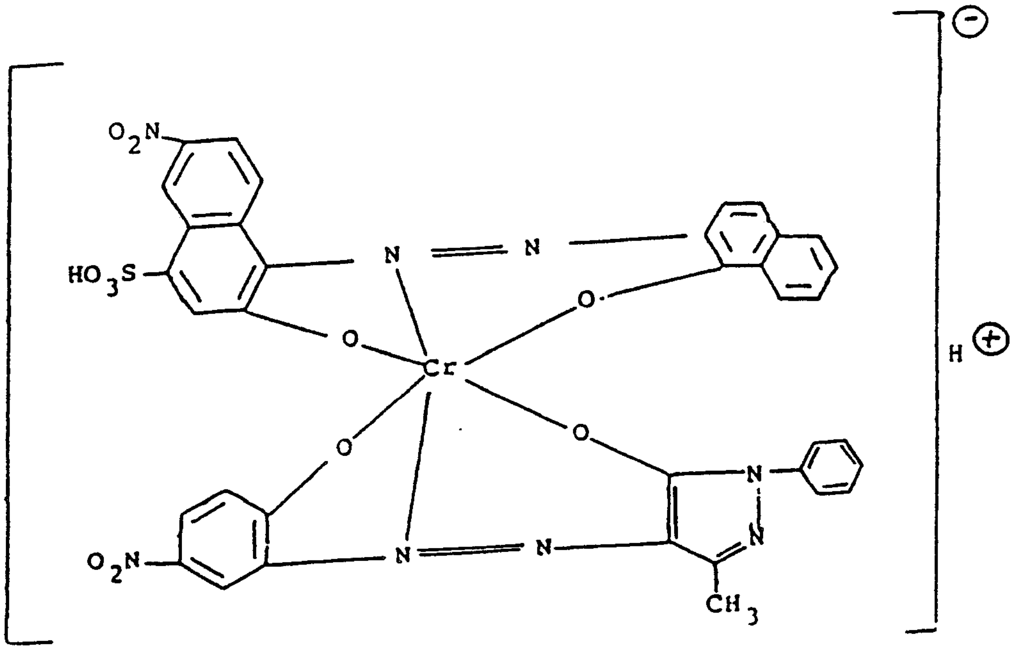

(III)

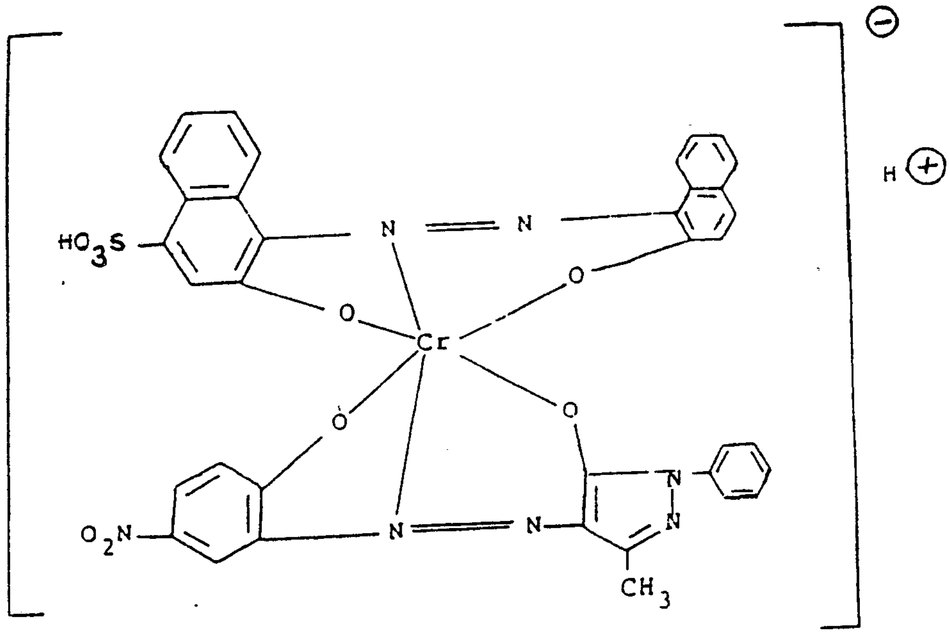

(IV)

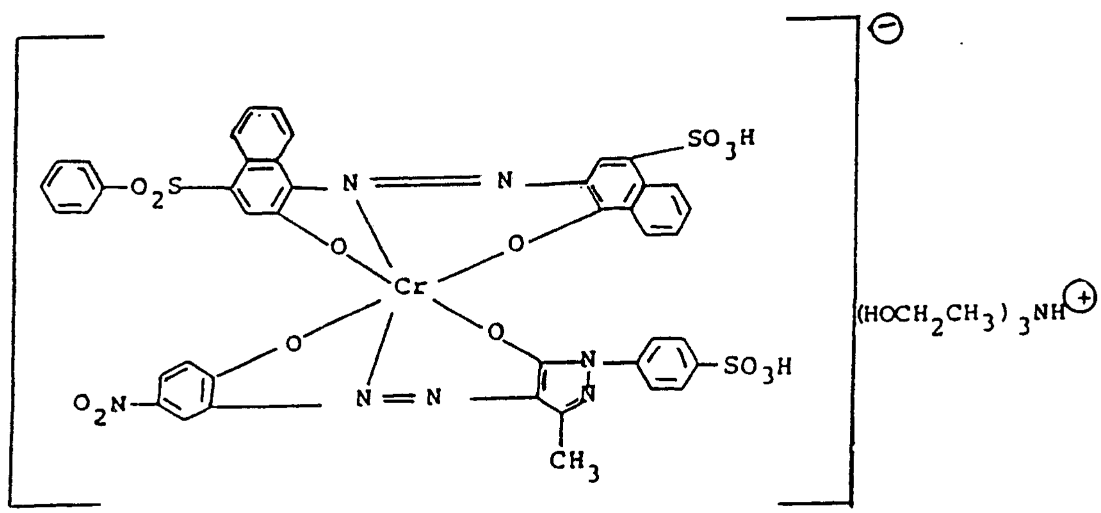

(V)

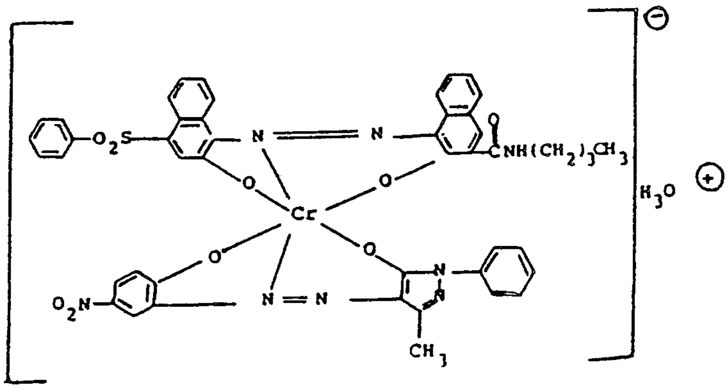

(VI)

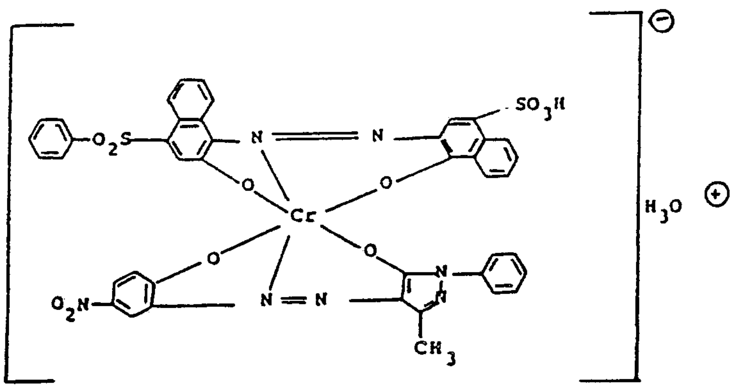

(VII)

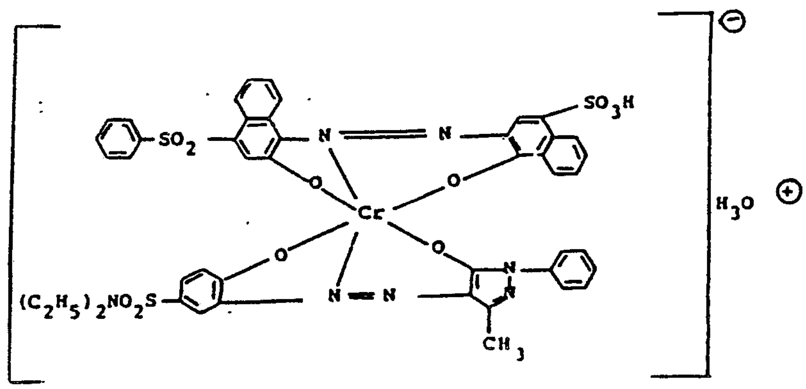

(VIII)

The dye intermediates for the image dye-providing materials of the invention may be prepared according to techniques which are well known to those skilled in the art as will be apparent from the specific preparative examples which are provided below herein. Accordingly, extensive discussion relating to the preparation of these compounds is not required. Generally, it is preferred to attach the chromium atom to the para-substituted phenyl-azopyrazolone dye moiety first and subsequently attach the 1-naphthol-2′-naphthol-1′,2-azo or the 2-naphthol-2′-naphthol-1,1′-azo dye moiety.

These dye intermediates are typically soluble in various solvents such as, for example, water and various organic solvents such as acetone, methanol, methyl cellosolve, etc. In the preparation of image dye-providing materials, the dye intermediates can be prepared with the appropriate substituent(s) in the desired position such as, for example, a sulfonic acid or a carboxylic acid group. These groups can then be converted to sulfonyl or carbonyl chloride groups and subsequently reacted with amine hydroquinonyl compounds to attach the silver halide developing hydroquinonyl groups to the dye intermediate and provide a dye developer. Preferred dye developers according to the invention are represented by the formulas

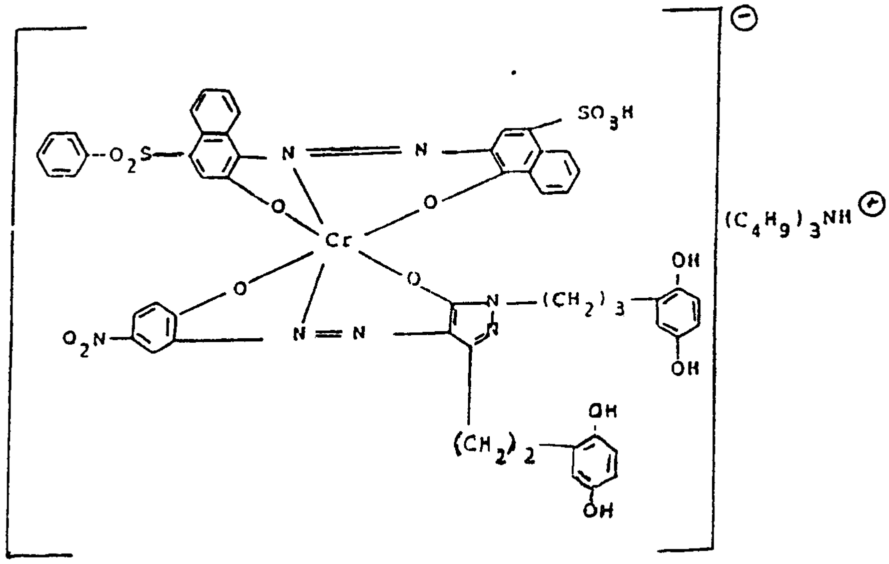

(IX)

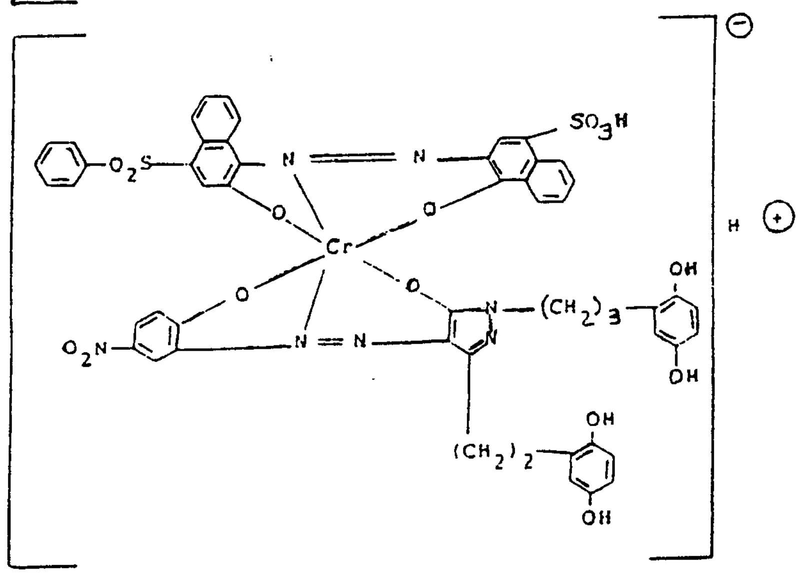

(X)

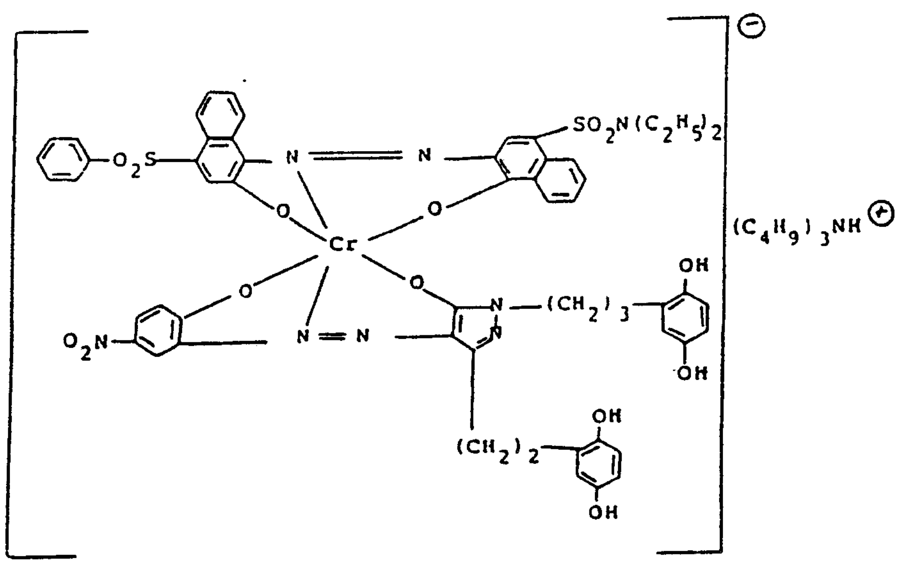

(XI)

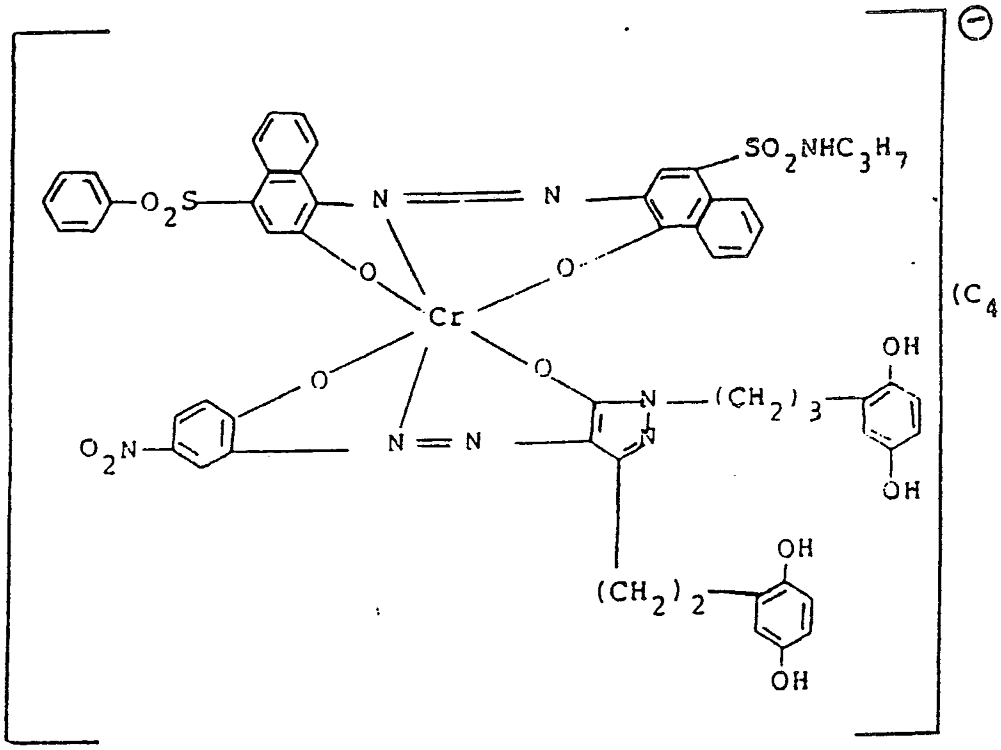

$(C_4H_9)_3NH^{\oplus}$

(XII)

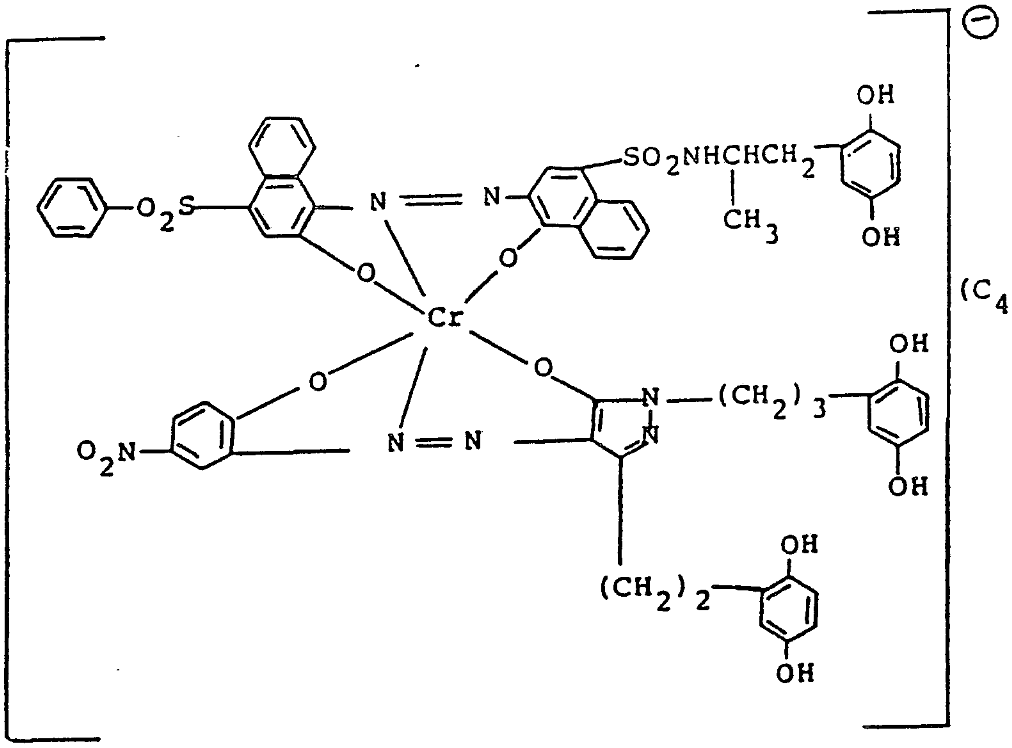

$(C_4H_9)_3NH^{\oplus}$

(XIII)

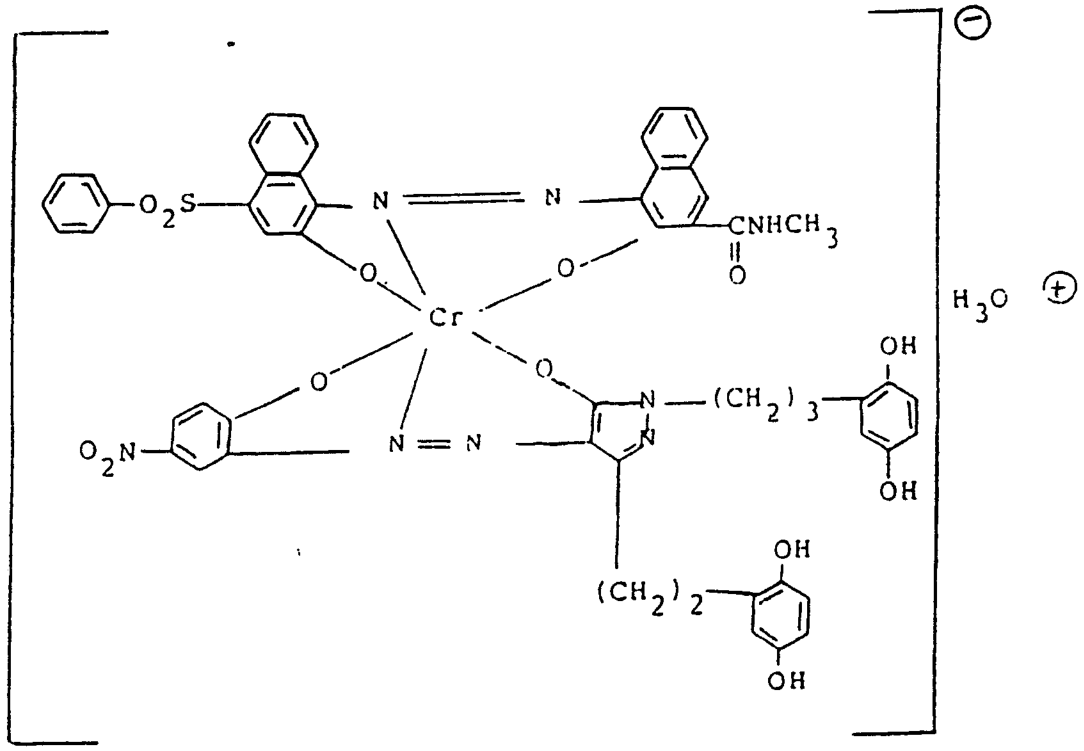

(XIV)

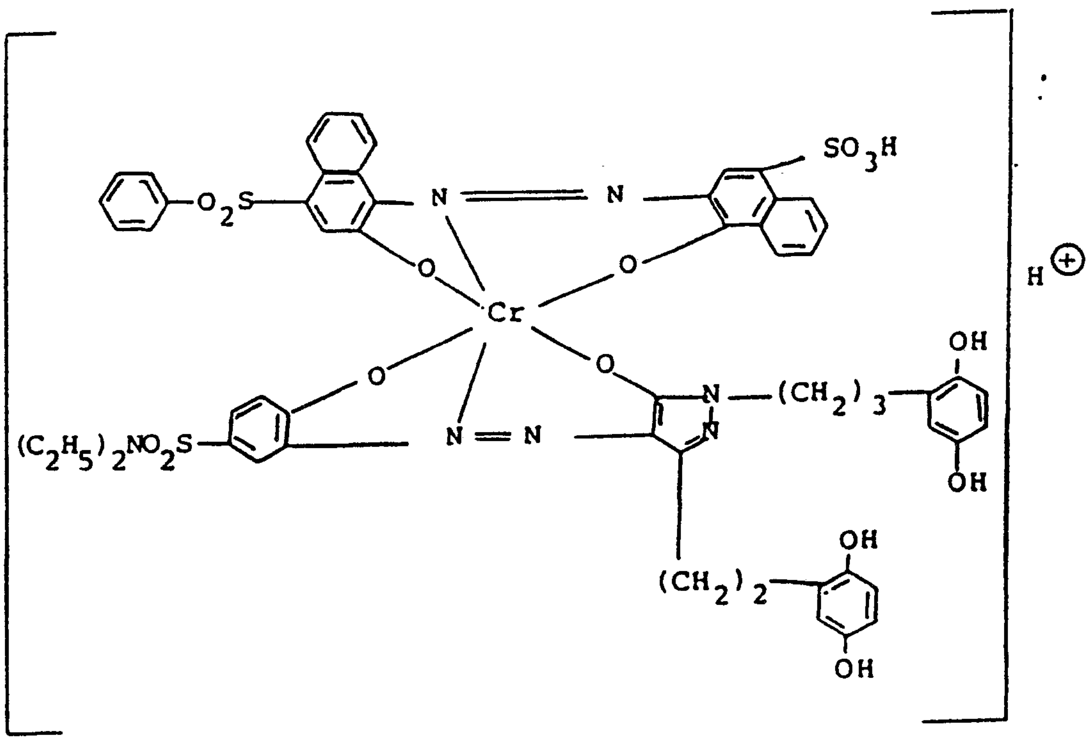

(XV)

The image dye-providing materials can be prepared according to techniques which are well known to those skilled in the art as will be apparent from the specific preparative examples which are provided below herein. Accordingly, extensive discussion relating to the preparation of the compounds of the invention is not necessary. Generally, it is preferable to attach the chromium atom to the para-substituted phenyl azo pyrazolone dye moiety first and subsequently attach the 1-naphthol-2′-naphthol-1′,2-azo dye moiety or the 2-naphthol-2′-naphthol-1,1′-azo dye moiety.

The black image dye-providing materials of the invention typically absorb almost evenly across the visible spectrum as is illustrated by Fig. 1 which is the reflection absorption spectrum of a photographic image made with a film unit including Compound I.

The image dye-providing materials of the invention may be used generally in association with any silver halide emulsion. As mentioned previously, the image dye-providing materials may be characterized

as either (1) initially soluble or diffusible in the processing composition but which are selectively rendered non-diffusible imagewise as a function of development; or (2) initially insoluble or nondiffusible in the processing composition but which selectively provide a diffusible product imagewise as a function of development. The image dye-providing materials may be complete dyes or dye intermediates, e.g., color couplers. The requisite differential in mobility or solubility may be obtained, for example, by a chemical reaction such as a redox reaction, coupling reaction or a cleavage reaction. In a particularly preferred embodiment of the invention, the image dye-providing materials are dye developers which are initially diffusible materials.

The dye developers contain, in the same molecule, both the chromophoric system of a dye and a silver halide developing function as is described in US—A—2,983,606. Other image dye-providing materials of the invention are: initially diffusible coupling dyes such as are useful in the diffusion transfer process described in US—A—3,087,817 and which are rendered nondiffusible by coupling with the oxidation product of a color developer; initially nondiffusible dyes which release a diffusible dye following oxidation, sometimes referred to as "redox dye releaser" dyes, such as described in US—A—3,725,062 and 4,076,529; initially nondiffusible image dye-providing materials which release a diffusible dye following oxidation and intramolecular ring closure as are described in US—A—3,443,940 or undergo silver assisted cleavage to release a diffusible dye in accordance with the disclosure of US—A—3,719,489; and initially nondiffusible image dye-providing materials which release a diffusible dye following coupling with an oxidized color developer as described in US—A—3,227,550.

The diffusion transfer film units of the invention include those wherein the image receiving element is designed to be separated from the photosensitive element after processing and integral positive-negative diffusion transfer film units which are retained intact after processing. In a preferred embodiment of the diffusion transfer film units of the invention utilise initially diffusible dye developers as the image dye-providing materials. As described in US—A—2,983,606, a photosensitive element containing a dye developer and a silver halide emulsion is photoexposed and a processing composition applied thereto, for example, by immersion, coating, spraying, flowing, etc., in the dark. The exposed photosensitive element is superposed prior to, during, or after the processing composition is applied, on a sheet-like support element which may be utilized as an image-receiving element. In a preferred embodiment, the processing composition is applied to the exposed photosensitive element in a substantially uniform layer as the photosensitive element is brought into superposed relationship with the image-receiving layer. The processing composition, positioned intermediate the photosensitive element and the image-receiving layer, permeates the emulsion to initiate development of the latent image contained therein. The dye developer is immobilized or precipitated in exposed areas as a consequence of the development of the latent image. This immobilization is apparently, at least in part, due to a change in the solubility characteristics of the dye developer upon oxidation and especially as regards its solubility in alkaline solutions. It may also be due in part to a tanning effect on the emulsion by oxidized developing agent, and in part to a localized exhaustion of alkali as a result of development. In unexposed and partially exposed areas of the emulsion, the dye developer is unreacted and diffusible and thus provides an imagewise distribution of unoxidized dye developer, diffusible in the processing composition, as a function of the point-to-point degree of exposure of the silver halide emulsion. At least part of this imagewise distribution of unoxidized dye developer is transferred, by imbibition, to a superposed image-receiving layer or element, said transfer substantially excluding oxidized dye developer. The image-receiving layer receives a depthwise diffusion, from the developed emulsion, of unoxidized dye developer without appreciably disturbing the imagewise distribution thereof to provide a reversed or positive color image of the developed image.

The image-receiving element may contain agents adapted to mordant or otherwise fix the diffused, unoxidized dye developer. In a preferred embodiment of said US—A—2,983,606 and in certain commercial applications thereof, the desired positive image is revealed by separating the image-receiving layer from the photosensitive element at the end of the suitable imbibition period. Alternatively, as also disclosed in said US—A—2,983,606, the image-receiving layer need not be separated from its superposed contact with the photosensitive element, subsequent to transfer image formation, if the support for the image-receiving layer, as well as any other layers intermediate said support and image-receiving layer, is transparent and a processing composition containing a substance, e.g., a white pigment, effective to mask the developed silver halide emulsion or emulsions is applied between the image-receiving layer and said silver halide emulsion or emulsions.

Dye developers, as noted in said US—A—2,983,606, are compounds which contain, in the same molecule, both the chromophoric system of a dye and also a silver halide developing function. By "a silver halide developing function" is meant a grouping adapted to develop exposed silver halide. A preferred silver halide development function is a hydroquinonyl group. In general, the development function includes a benzonoid developing function, that is, an aromatic developing group which forms quinonoid or quinone substances when oxidized.

Particularly useful products for providing dye developer images are disclosed in US—A—3,415,644. This patent discloses photographic products wherein a photosensitive element and an image-receiving element are maintained in fixed relationship prior to exposure, and this relationship is maintained as a laminate after processing and image formation. In these products, the final image is viewed through a

transparent (support) element against a light-reflecting, i.e., white background. Photoexposure is made through said transparent element and application of the processing composition provides a layer of light-reflecting material to provide a white background. The light-reflecting material (referred to in said patent as an "opacifying agent") is preferably titanium dioxide, and it also performs an opacifying function, i.e., it is effective to mask the developed silver halide emulsions so that the transfer image may be viewed without interference therefrom, and it also acts to protect the photoexposed silver halide emulsions from post-exposure fogging by light passing through said transparent layer if the photoexposed film unit is removed from the camera before image-formation is completed.

US—A—3,647,437 is concerned with improvements in products and processes disclosed in said US—A—3,415,644, and discloses the provision of light-absorbing materials to permit such processes to be performed, outside of the camera in which photoexposure is effected, under much more intense ambient light conditions. A light-absorbing material or reagent, preferably a pH-sensitive phthalein dye, is provided so positioned and/or constituted as not to interfere with photoexposure but so positioned between the photoexposed silver halide emulsions and the transparent support during processing after photoexposure as to absorb light which otherwise might fog the photoexposed emulsions. Furthermore, the light-absorbing material is so positioned and/or constituted after processing as not to interfere with viewing the desired image shortly after said image has been formed. In the preferred embodiments, the light-absorbing material, also sometimes referred to as an optical filter agent, is initially contained in the processing composition together with a light-reflecting material, e.g., titanium dioxide. The concentration of the light-absorbing dye is selected to provide the light transmission opacity required to perform the particular process under the selected light conditions.

In a particularly useful embodiment, the light-absorbing dye is highly colored at the pH of the processing composition, e.g., 13—14, but is substantially non-absorbing of visible light at a lower pH, e.g., less than 10—12. This pH reduction may be effected by an acid-reacting reagent appropriately positioned in the film unit, e.g., in a layer between the transparent support and the image-receiving layer.

The dye developers may be incorporated in the silver halide emulsion or, preferably, in a separate layer behind the silver halide emulsion. Such dye developer layer may be applied by use of a coating solution containing the dye developer, in a concentration calculated to give the desired coverage of dye developer per unit area, in a film-forming natural or synthetic polymer such as, for example, gelatin, polyvinyl alcohol and the like, adapted to be permeated by the processing composition.

Other diffusion transfer products and processes according to the invention are the types described in US—A—3,573,043 and 3,594,165.

As described previously, the image dye-providing materials of the invention are not restricted to dye developers but rather may include many other types of initially diffusible and initially nondiffusible image dye-providing materials. Thus, for example, an initially diffusible coupling dye which is useful in the diffusion transfer process described in US—A—3,087,817 may be provided by attaching to the chromophoric system one or more coupling moieties such as a phenol or a naphthol having a free position para to the hydroxyl group. An example of such an image dye-providing material according to the invention is

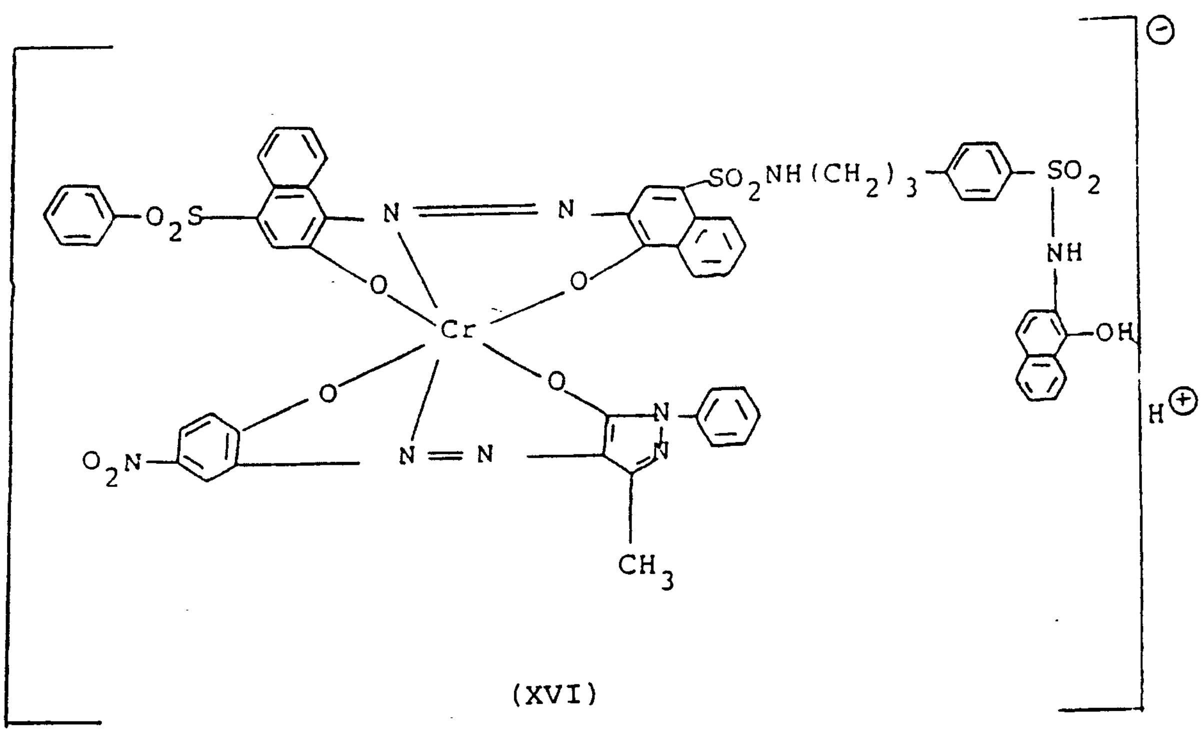

(XVI)

This dye is initially diffusible but is rendered nondiffusible by coupling with the oxidation product of a color developer, e.g., a p-phenylenediamine or a p-aminophenol, to form a less diffusible product. If the coupling position is substituted by a substituent which renders the dye initially nondiffusible by virtue of a ballast group and which substituent is displaceable upon coupling, such a dye may be employed to provide a diffusible dye where coupling occurs employing the principles described in US—A—3,227,550.

An initially nondiffusible "redox dye releaser" image dye-providing material useful in the diffusion transfer process described in US—A—4,076,529 may be provided by attaching one or more sulfonamidophenol or sulfonamidonaphthol groups to the chromophoric system. An example of such a material according to the invention is represented by the formula

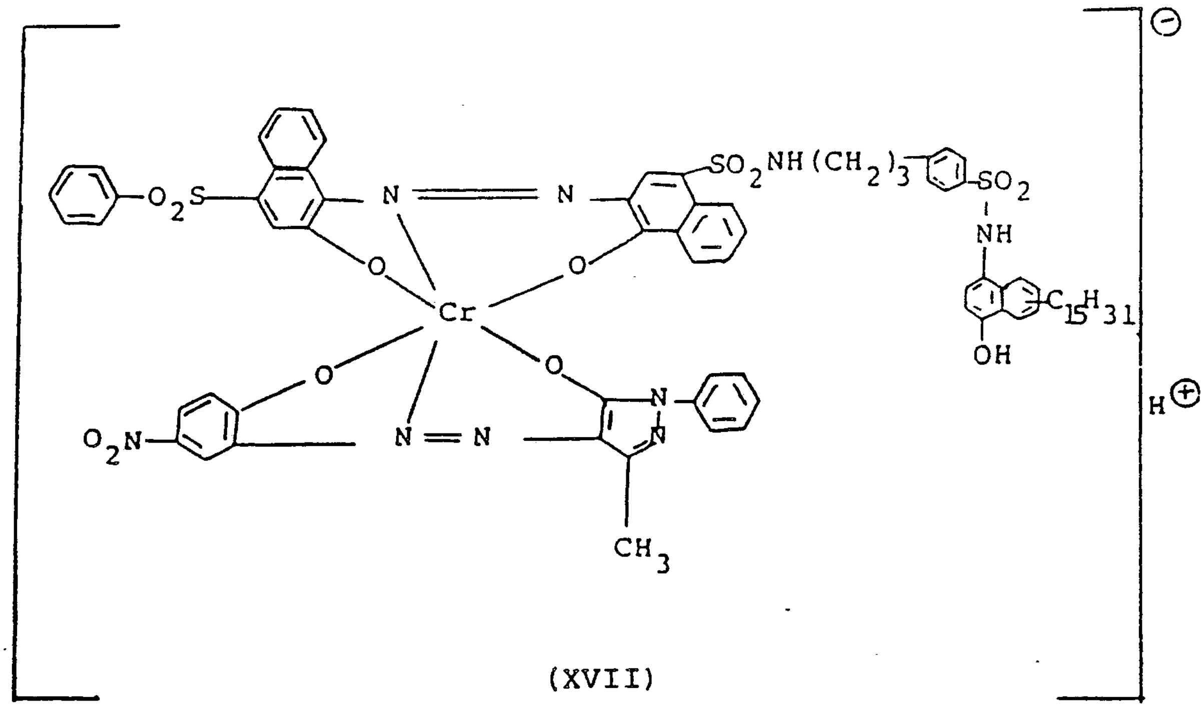

(XVII)

Other sulfonamidophenol and sulfoamidonaphthol groups known in the art, for example, such as those described in US—A—4,053,312 and 4,055,428, which cleave in alkaline solution at the sulfonamido groups following oxidation may be used in place of the p-sulfonamidophenol group illustrated above.

Another class of initially nondiffusible image dye-providing materials (described in US—A—3,443,940) release a diffusible dye following oxidation and intramolecular ring closure. An image dye-providing material of this type according to the invention is represented by the formula

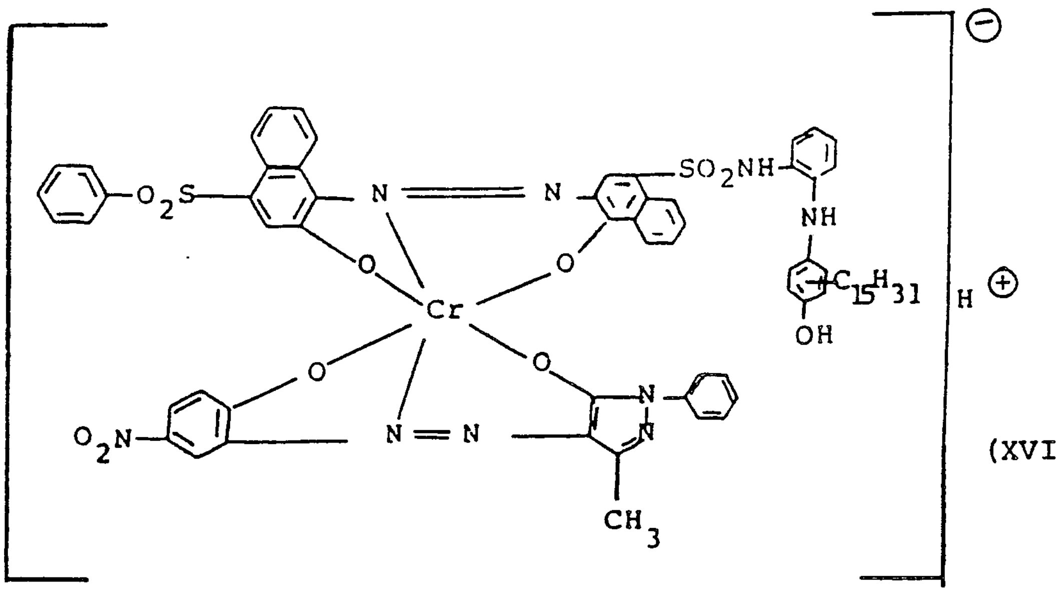

(XVIII)

Other image dye-providing materials which cleave in alkali following oxidation may be provided by a compound within Formula D or E wherein Y is —O— or —S— and the hydroquinonyl group contains a ballast group, e.g., $C_{15}H_{31}$ in accordance with the disclosure of US—A—3,725,062. An example of such a compound is represented by the formula

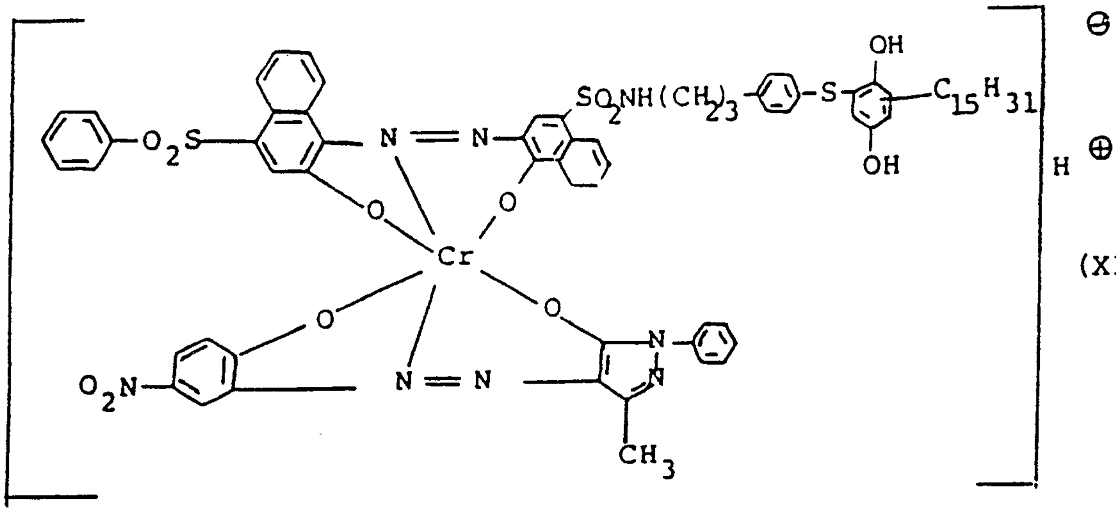

(XIX)

It should be noted that although the ballast group shown in the compounds illustrated above is a long chain alkyl group, other ballast groups known in the art may also be used.

In the use of a nondiffusible image dye-providing material which releases a diffusible image dye-providing material following oxidation in an alkaline environment, the requisite oxidation may be effected by the oxidation product of a mobile developing agent used to develop the photoexposed silver halide emulsion. A particularly effective developing agent for this purpose is 1-phenyl-4,4-dimethyl-3-pyrazolidone; other suitable developing agents are known in the art.

Development is advantageously effected in the presence of an oniom compound, particularly a quaternary ammonium compound, in accordance with the disclosure of US—A—3,173,786. Quaternary ammonium compounds which form an active methylene compound in alkali are especially useful.

Development may be effected in the presence of a colorless auxiliary or accelerating developing agent such as, for example, a 3-pyrazolidone or a hydroquinone such as 4-methylphenylhydroquinone, which may be initially arranged in a layer of the photosensitive element or in the processing composition.

In another preferred embodiment of the invention the diffusion control moiety is a thiazolidine group whose cleavage is silver catalyzed. As described in US—A—3,719,489, image dye-providing materials of this type are photographically inert in the photographic processing composition but are capable of undergoing cleavage in the presence of an imagewise distribution of silver ions and/or soluble silver complex containing silver ions made available as a function of development to liberate a reagent in an imagewise distribution corresponding to that of said silver ions and/or said complex. An example of such a compound according to the invention is represented by the formula

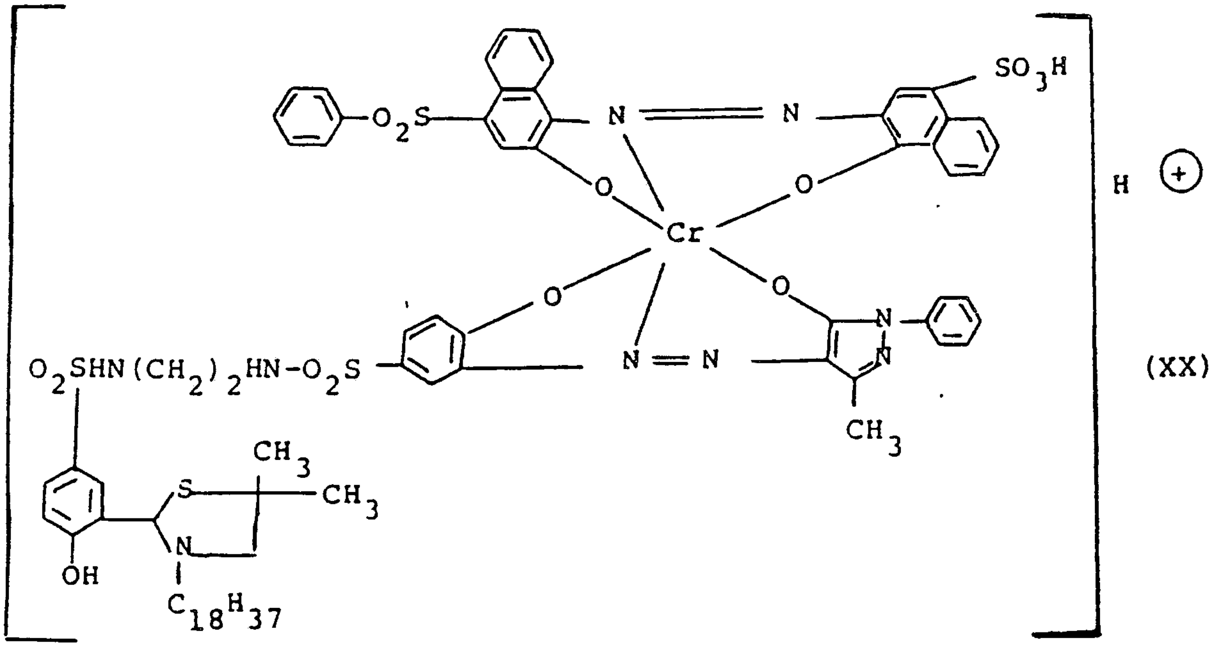

(XX)

The invention will now be described further in detail with respect to specific preferred embodiments by way of examples, it being understood that these are intended to be illustrative only and the invention is not limited to the materials, conditions, process parameters, etc., recited herein. All parts and percentages are by weight unless otherwise specified.

## Example I

Exactly 50 g (0.25 mol) of 3-hydroxy-2-naphthalene carboxylic acid methyl ester and 18.1 g (24.4 ml, 0.25 mol) of n-butylamine were combined in a 250 ml round bottom flask, heated until a melt formed and then until a gentle reflux started. The reaction mixture was refluxed for about 2 hours after which an additional 15 ml of the n-butylamine was added and the mixture refluxed for an additional hour. The reaction mixture was cooled to room temperature and allowed to stand overnight. The resulting solid was recrystallized from 200 ml of toluene, dried in air overnight and then under vacuum at 40°C to give 64 g of light yellow crystals.

The crystals were stirred in 800 ml of water overnight, acidified to pH 1 with concentrated hydrochloric acid, stirred an additional hour and the product collected by filtration. The product was washed well with water until the washings were neutral and dried in air to give 45.8 g (76% yield) of a light yellow solid, m.p. 123°—124°C, represented by the formula

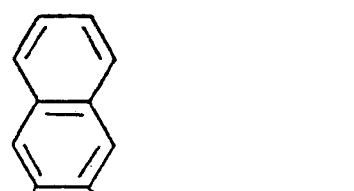

$C_{15}H_{17}O_2N$ requires: 74.05% C, 7.04% H, 13.15% O and 5.76% N. Elemental analysis found 74.25% C, 7.18% H, 13.23% O and 5.78% N.

To a solution of 1.22 g (0.005 mol) of the previous product in 20 ml of pyridine at 5°C, there was added, with stirring 1.55 g (0.005 mol) of a diazonium salt represented by the formula

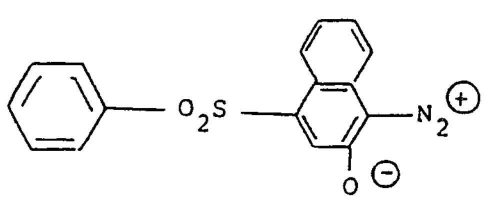

and stirring was then continued at room temperature, under nitrogen, for 2 hours. To this mixture there was slowly added 2.5 ml of 50% NaOH and stirring was continued. Coupling took place as evidenced by the formation of a deep blue color. The solution was stirred for 30 minutes and then slowly poured into 300 ml of stirred water. The mixture was acidified to about pH 6 with concentrated hydrochloric acid and the resulting purple precipitate was collected, washed well with water and dried in air overnight.

The crude product was chromatographed on a 2″ × 12″ silica column, eluted with methylene chloride and then with a mixture of methanol and methylene chloride. The product fractions wee combined and evaporated to dryness to give 2.1 g (76% yield) of a purple powder represented by the formula

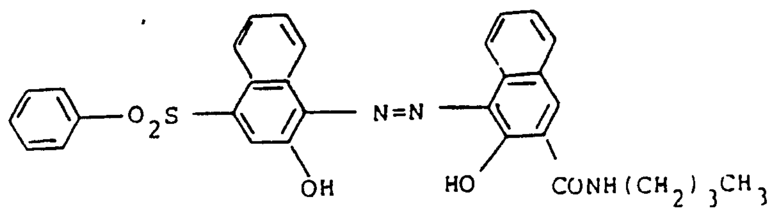

Vis (meth. cell.) λmax 610 nm, ε = 16,000. Thin layer chromatography on Whatman $K_5F$ silica plates, using 1:99 $MeOH:CH_2Cl_2$ to elute, showed essentially a single purple spot, $R_f$ = 0.4 with traces of impurities.

$C_{31}H_{27}O_5N_3S$ requires 67.25% C, 4.92% H, 14.45% O, 7.59% N and 5.79% S. Elemental analysis found 67.42% C, 5.01% H, 14.27% O, 7.46% N and 6.00% S.

Example II

To a dispersion of nitroaminophenol (20 g, 0.13 mol) in 60 ml of acetic acid there was added a solution of sodium nitrite (10 g, 0.14 mol) in 10 ml of water over a five minute period. The resulting azo oxide yellow dispersion was stirred for 20 minutes.

A saturated sodium carbonate solution (100 ml) was added to a solution of 1-phenyl-3-methyl-pyrazolin-5-one (22 g, 0.13 mol) in 500 ml of acetone and the slurry stirred. The azo oxide yellow dispersion was added in portions to the pyrazolone slurry and the mixture stirred for 20 minutes. The reaction mixture was quenched into one gallon of 10% hydrochloric acid. The resulting solid was collected by filtration, rinsed three times with 100 ml of water and dried under vacuum to give an azopyrazolone dye represented by the formula

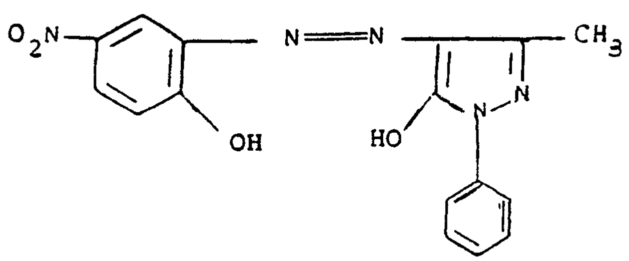

The azo dye (15 g, 0.044 mol) and chromic chloride hexahydrate (35.3 g, 0.133 mol) were combined with 100 ml of methyl cellosolve and the mixture was heated to reflux for 2½ hours. The cooled reaction mixture was added to two liters of cold saline solution. The resulting solid was collected by filtration, pressed and rinsed with water and dried under vacuum to yield 20 g (95% yield) of a chromed azopyrazolone dye represented by the formula

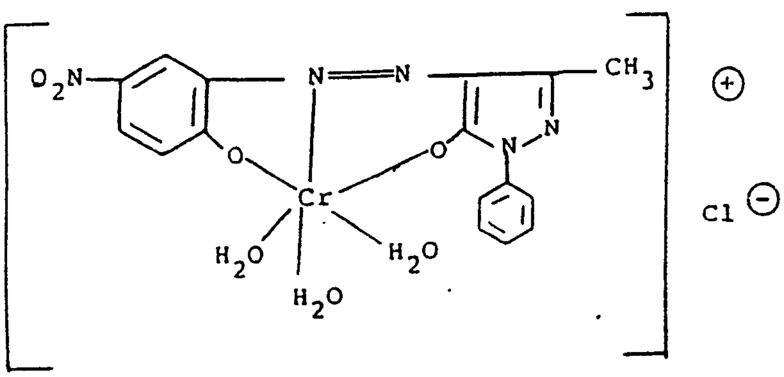

Example III

The azopyrazolone dye shown in Example II (10 g, 0.029 mol) and potassium acetate (10 g) were dissolved in 75 ml of methyl cellosolve and warmed on a steam cone under nitrogen. To the solution there was added dropwise a solution of a chromed azo dye (12.5 g, 0.029 mol) represented by the formula

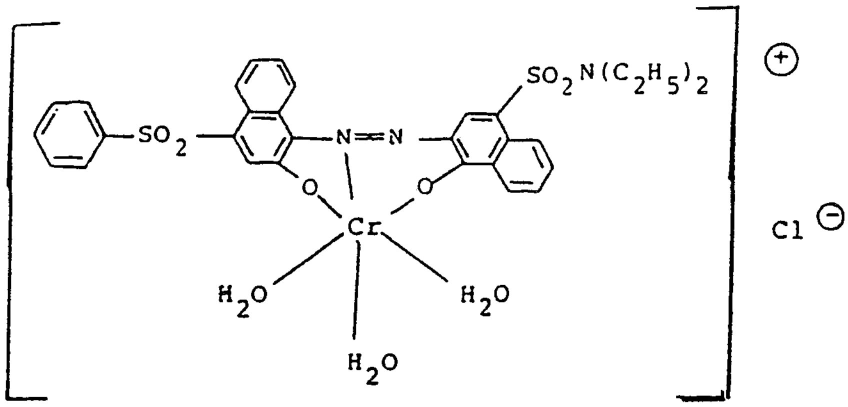

in 400 ml of methyl cellosolve. The reaction mixture was cooled, quenched into 8 liters of water and flocked from solution by adding a minimal amount of 10% hydrochloric acid. The resulting solid was collected by filtration, rinsed and dried to yield 29 g of dye (I), a black solid, Vis (meth. cell.) λmax 645 nm, ε = 21,500; 592 nm, ε = 20,700; 500 nm, ε = 22,800.

$C_{46}H_{39}O_{11}N_8S_2Cr$ requires 55.91% C, 4.16% H, 10.9% N, 6.07% S and 5.53% Cr. Elemental analysis found 55.47% C, 3.95% H, 11.25% N, 6.44% S and 5.22% Cr.

Example IV

The azo dye of Example I (1.0 g, 0.0018 mol), 0.86 g (0.0018 mol) of the chromed azopyrazolone dye of Example II, 20 ml of ethanol and 0.53 g of KOAc were combined in a 125 ml round bottom flask and heated to reflux. After 15 minutes all of the azo dye had been consumed but a small amount of the chromed azopyrazolone dye remained (as monitored by TLC). Small amounts of the azo dye were added at 10 minute intervals (about 0.15 g total) and refluxing was continued. The reaction mixture was cooled to room temperature and quenched into 350 ml of stirred water. The solution was acidified to pH of about 1 with concentrated hydrochloric acid. The resulting, very fine black precipitate was collected, washed with water and dried in air to give 1.4 g (81% yield) of a black solid, dye VI, Vis (meth. cell.) λmax = 390 nm, ε = 19,000; 500 nm, ε = 17,200; 595 nm, ε = 15,400; 647 nm, ε = 16,400.

$C_{47}H_{39}O_{10}N_8Cr.2H_2O$ requires 56.68% C, 4.35% H, 19.28% O, 11.25% N, 5.22% Cr and 3.22% S. Elemental analysis found 56.56% C, 4.14% H, 11.11% N, 4.83% Cr and 3.73% S.

Example V

To a mixture of the chromed azopyrazolone dye of Example II (0.9 g, 0.0019 mol), 1.0 g (0.0019 mol) of an azo dye represented by the formula

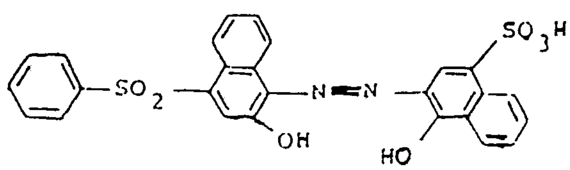

and 0.55 g (0.0056 mol) of KOAc in a 50 ml round bottom flask there was added 25 ml of ethanol with stirring and the resulting solution brought to reflux, under nitrogen, on a steam cone. After 30 minutes a small ammount of the chromed azopyrazolone dye was added and refluxing was continued for one additional hour. The reaction mixture was allowed to cool to room temperature and stirring was continued overnight.

The entire mixture was poured into about 300 ml of water and acidified to pH of about 1 with concentrated hydrochloric acid. The resulting fine black precipitate was collected on a Buchner funnel, washed with a small amount of acidic water and air dried to give about 1.8 g of a black solid. The crude product was dispersed in about 75 ml of ethyl acetate and stirred for about two hours. The product was collected by filtration, washed well with ethyl acetate and dried in air to give 1.6 g (89% yield) of dye VI.

Vis (meth. cell.) λmax = 505 nm, ε = 19,300; 595 nm, ε = 17,800; 652 nm, ε = 18,300.

Example VI

Fast Red ITR (5.0 g, 0.019 mol) (Aldrich Chemical Co.) was suspended in a mixture of 60 ml of ethanol, 7 ml of HCl and 15 ml of water with stirring and there was slowly added dropwise a solution of $NaNO_2$ (1.33 g, 0.019 mol) in 3 ml of water. Stirring was continued in an ice bath for 10 minutes during which time the dye slowly dissolved to give a brownish yellow solution. Methyl phenyl pyrazolone (3.3 g, 0.019 mol) was dissolved in a mixture of 50 ml of pyridine, 200 ml of methanol and 200 ml of water with stirring and the Fast Red ITR diazonium solution poured into the pyrazolone solution in a slow steady stream. The reaction solution turned orange and then an orange precipitate formed. The mixture was then stirred for 30 minutes, quenched into stirred ice water and acidified to pH 1 with 60 ml of conc. HCl. The product was collected by filtration, washed with water and recrystallized from methyl cellosolve to give 7.7 g (90% yield) of an azo dye represented by the formula

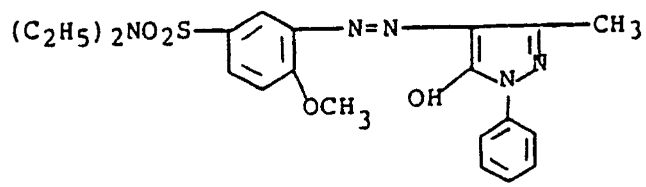

in the form of orange crystals. The structure of the dye was confirmed by a NMR spectrum.

The azo dye compound (3.0 g, 0.0068 mol), chromium chloride hexahydrate (6.67 g, 0.025 mol) and 20 ml of methyl cellosolve were combined and heated to reflux with stirring for 3 hours. The resulting dark orange solution was cooled to room temperature and slowly poured into 200 ml of well stirred brine. The resulting brown precipitate was collected, washed with cold water and dried in air to give 4.09 (100% yield) of a brown powder represented by the formula

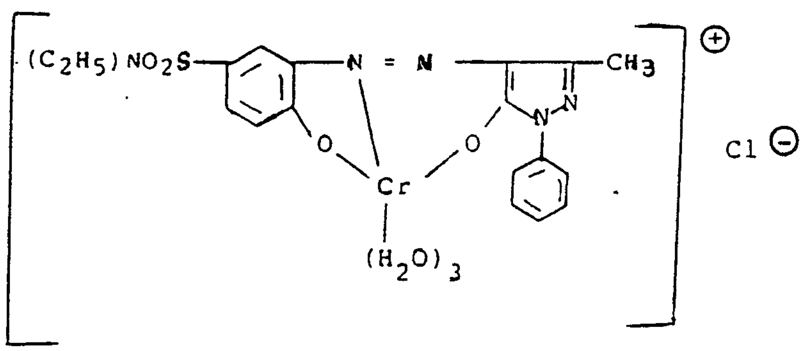

UV, Vis (meth. cell.) λmax = 330 nm, ε = 8,000; 360 nm, ε = 6800; 495 nm, ε = 16,800.

The chrome complexed dye (1.0 g, 0.0018 mol) was dissolved in 20 ml of ethanol and to the solution there was added the azo dye illustrated in Example V 0.94 g, 0.0018 mol) and then KOAc (0.53 g) and the mixture brought to reflux with stirring. The reaction mixture quickly turned blackish. After 15 minutes an additional 0.1 g of the azo dye was added and the solution refluxed for an additional 45 minutes,then cooled to room temperature and allowed to stir overnight. The resulting precipitate was collected by filtration, washed with ethanol, dried in air and then under vacuum to give 1.7 g (92% yield) of black dye VIII.

UV, Vis (meth. cell.) λmax −350 nm, ε = 15,800; 490 nm, ε = 17,200; 505 nm, ε = 17,600; 500 nm, ε = 14,500; 600 nm, ε = 18,200; 652 nm, ε = 19,000.

Example VII

To a stirred mixture of 4-nitro-2-aminophenol (30.8 g, 0.2 mol) in 400 ml of acetic acid at 10°C there was added dropwise, over 20 minutes, a solution of sodium nitrite (13.8 g, 0.2 mol) in 30 ml of water. Stirring was continued for an additional 15 minutes. The resulting diazonium solution was then added in portions at 10°C to a stirred solution of 146 g (0.2 mol) of a pyrazolone compound represented by the formula

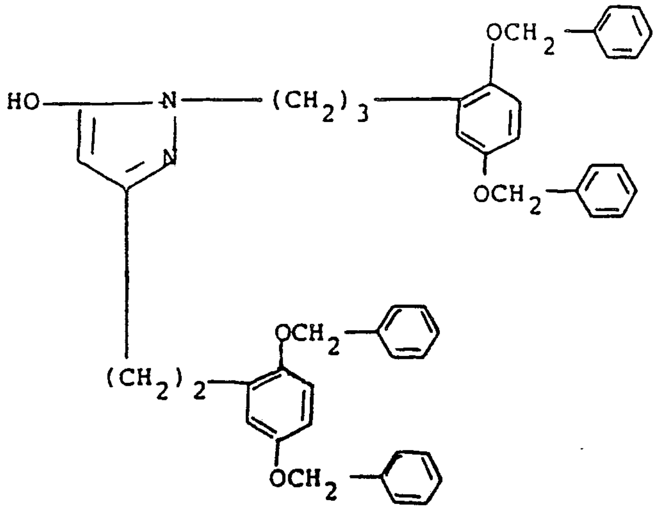

(XXI)

in 600 ml of pyridine. The resulting solution was stirred for one-half hour and then quenched into a stirred solution of four gallons of ice water containing 600 ml of concentrated hydrochloric acid. The solid was collected by filtration, rinsed well with water, pressed and dried. Recrystallization from two liters of acetonitrile yielded 160 g (90% yield) of a light orange dye, Vis (meth. cell.) λmax 410 nm, ε = 13,200, 513 nm, ε = 6,200, represented by the formula

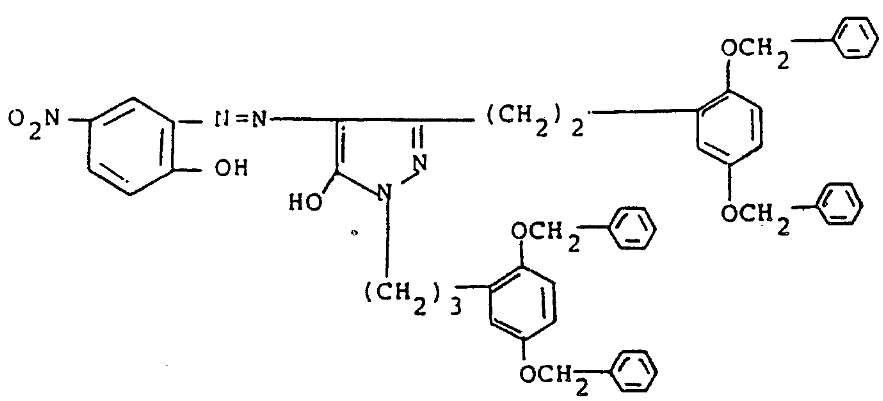

(XXII)

$C_{54}H_{49}N_5O_8$ requires 72.4% C, 5.47% H, 7.82% N and 14.3% O. Elemental analysis found 72.8% C, 5.7% H, 7.95% N and 14.25% O.

To a solution of compound (XXII) (15 g, 0.0167 mol) in one liter of methylene chloride, under argon at ambient temperature, there were added, with stirring, boron trifluoride etherate (2.4 g, 0.17 mol) and 2-bromo-1,3,2-benzodioxaborole (34 g, 0.17 mol) and stirring was continued for 12 hours. The reaction mixture was quenched into a 2 phase dispersion of water (2 liters) and petroleum ether (500 ml) with rapid stirring. The product separated as a solid and was collected by filtration. Recrystallization from acetonitrile yielded 8.0 g (90% yield) of a yellow dye developer represented by the formula

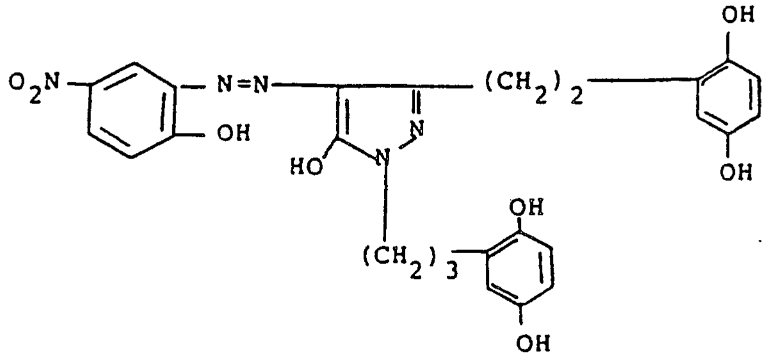

(XXIII)

Vis (meth. cell.) λmax = 410 nm, ε = 14,700.

$C_{26}H_{25}O_8N_5$ requires 54.64% C, 5.11% H and 12.25% N. Elemental analysis found 54.89% C, 5.0% H and 12.92% N.

Compound XXIII (5 g, 0.009 mol) and chromic chloride hexahydrate (7.5 g, 0.028 mol) were combined in 75 ml of methyl cellosolve under nitrogen and heated to reflux for two hours. The cooled solution was quenched into 500 ml of saline solution. The resulting solid was collected by filtration, rinsed with cold 50% brine and then with water and dried under vacuum to yield 5.3 g of a brown solid, Vis (meth. cell.) λmax 490 nm, ε = 14,800, 520 nm, ε = 10,400, represented by the formula

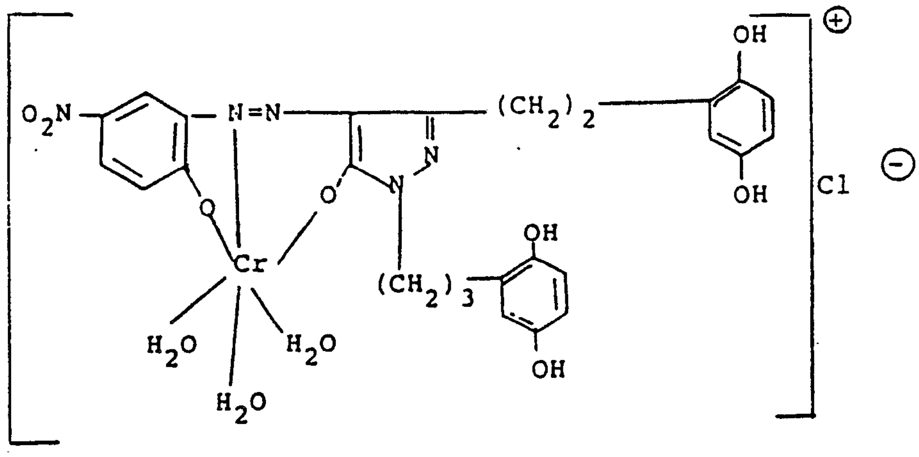

(XXIV)

Example VIII

A five liter, three neck round bottom flask equipped with an overhead stirrer was charged with 80 g (0.26 mol) of an azo oxide compound represented by the formula

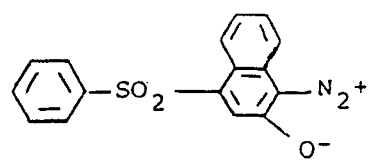

one liter of pyridine and two liters of ethanol followed by 1-naphthol-4-sulfonic acid sodium salt (100 g, 0.41 mol), 600 ml of water and 600 ml of saturated sodium bicarbonate solution. The slurry was stirred at ambient temperature for 48 hours. Analysis by thin layer chromatography indicated complete reaction. The reaction mixture was quenched into 4 gallons of ice water which included 1 liter of concentrated hydrochloric acid. The resulting solid was collected by filtration, rinsed with water and dried in air to give 100 g (78% yield) of an azo dye represented by the formula

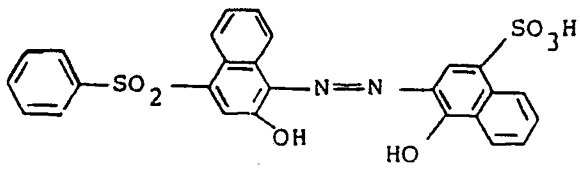

(XXV)

Vis (meth. cell.) λmax 530 nm, ε = 11,400.

Example IX

Compound XXIV (2 g, 0.0029 mol) and Compound XXV (1.5 g, 0.0029 mol) were combined in 50 ml of methyl cellosolve with tributylamine (1.09 g, 0.0059 mol) and warmed on a stream cone for one hour. The reaction mixture was quenched into cold 10% hydrochloric acid and the resulting solid collected, rinsed and dried to give 3 g (79% yield) of black dye developer IX, Vis (meth. cell.) λmax 650 nm, ε = 22,800; 598 nm, ε = 21,200; 505 nm, ε = 20,200.

Example X

Compound X was prepared in the same manner described in Example IX with the exception that potassium acetate was used as a base instead of tributylamine. Vis (meth. cell.) λmax 653 nm, ε = 19,200; 600 nm, ε = 18,000, 500 nm, ε = 17,600.

Example XI

Compound XI was prepared in the same manner described in Example IX with the exception that an azo diethylsulfonamide dye compound was employed in place of the azo sulfonic acid dye. The reaction gave 1.85 g of black dye developer XI (97% yield), Vis (meth. cell.) 500 nm, ε = 23,000; 590 nm, ε = 22,000; 641 nm, ε = 23,000.

$C_{68}H_{78}O_{15}N_9S_2$ Cr requires 59.2% C, 5.8% H, 17.4% O, 9.1% N, 4.6% S and 3.8% Cr. Elemental analysis found 59.1% C, 5.5% H, 17.9% O, 8.8% N, 4.6% S and 3.8% Cr.

Example XII

Compound XII was prepared in the manner described in Example XI with the exception that an appropriately substituted propylamine was used instead of diethylamine in the preparation of the dye.

Example XIII

Compound XIII was prepared in the manner described in Example XI with the exception that

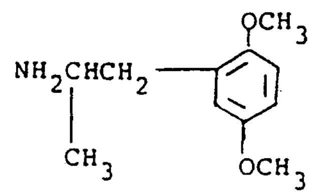

was used instead of diethylamine to form the dye and the methyl ether groups were converted to hydroxy groups by reaction with 2-bromo-1,3,2-benzodioxaborole prior to forming the complete dye developer, Compound V. Vis (meth. cell.) λmax 622 nm, ε = 16,000, 580 nm, ε = 17,900, 504 nm, ε = 18,000.

Example XIV

Exactly 10.1 g (0.05 mol) of 3-hydroxy-2-naphthalene carboxylic acid methyl ester and 100 ml of methylamine (40% solution in water) were combined in a flask and refluxed for two hours. The solution was cooled to room temperature and stirred overnight. The reaction solution was quenched into a stirred solution of 1500 ml of ice water and 75 ml of conc. hydrochloric acid. The resulting yellow precipitate was collected by filtration, washed well with water and dried in air. The crude product was recrystallized from 300 ml of toluene to give 8.8 g (88% yield) of product, light yellow crystals, represented by the formula

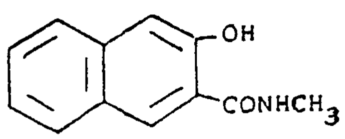

The previous product (1.0 g, 0.005 mol), the azo oxide utilized in Example VIII (1.55 g, 0.005 mol) and 75 ml of acetone were combined in a flask and stirred under nitrogen while being cooled in an ice bath. To the mixture there was added with stirring, 5 ml of a 50% (w/v) solution of NaOH. The reaction vessel was removed from the ice bath and stirring under nitrogen was continued as the reaction mixture warmed. The mixture slowly turned greenish, then deep blue and finally deep purple. The solution was stirred for an additional 1½ hours and then quenched into a solution of 300 ml of ice water and 10 ml of conc. hydrochloric acid. The resulting purple precipitate-water mixture was stirred overnight. The precipitate was collected by filtration, washed with water and about one liter of a 7:3 solution of methanol in water and dried in air overnight to give 1.4 g (55% yield) of a purple powder represented by the formula

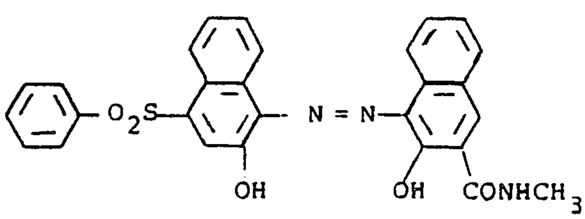

XXVI

A solution of compound XXIV (1.3 g, 0.0019 mol) in 35 ml of ethanol was formed and to it there were added with stirring, potassium acetate (0.6 g, 0.006 mol) and then Compound XXVI (1.0 g, 0.002 mol). The mixture was then brought to reflux under nitrogen and quickly turned black. After 5 minutes an additional 0.1 g of Compound XXVI was added to the reaction mixture which was then refluxed an additional 15 minutes. The reaction mixture was quenched into a solution of 100 ml of water, 50 ml of saline and 5 ml of

conc. hydrochloric acid. The resulting black precipitate was collected by filtration, washed well with 100 ml of water and dried under vacuum to give 1.6 g (74% yield) of a black powder, dye developer XIV, Vis (meth. cell.) λmax 648 nm, ε = 16,500; 595 nm, ε = 15,400; 498 nm, ε = 17,000; 390 nm, ε = 17,200.

Example XV

A film unit according to the invention was prepared hwerein the negative element comprised a transparent subcoated polyester photographic film base having the following layers coated thereon in succession:

1. a dye developer layer comprising about 753 mg/m$^2$ of Compound (IX) and about 538 mg/m$^2$ of cellulose acetate hydrogen phthalate;

2. a blue sensitive silver iodobromide emulsion layer coated at a coverage of about 1614 mg/m$^2$ of silver 1.6 μm and about 1033 mg/m$^2$ of gelatin; and

3. a layer comprising about 81 mg/m$^2$ of 4'-methyl (phenyl hydroquinone, about 323 mg/m$^2$ of gelatin and about 162 mg/m$^2$ of diethyldodecamide;

The image receiving element comprised a transparent subcoated polyethylene terephthalate photographic film base on which there were coated the following layers in succession:

1. as a polymeric acid layer approximately 9 parts of a ½ butyl ester of polyethylene/maleic anhydride copolymer and 1 part of polyvinyl butyral coated at a coverage of about 26,372 mg/m$^2$;

2. a timing layer containing about 3229 mg/m$^2$ of a 60—29—6—4—0.4 pentapolymer of butylacrylate, diacetone acrylamide, methacrylic acid, styrene and acrylic acid and including about 5% polyvinyl alcohol; and

3. a polymeric image receiving layer of (a) 3 parts of a mixture of 2 parts polyvinyl alcohol and 1 part poly-4-vinylpyridine and (b) 1 part of a graft copolymer comprised of 4-vinylpyridine (4VP) and vinyl benzyl trimethyl ammonium chloride (TMQ) grafted onto hydroxyethyl cellulose (HEC) at a ratio of HEC/4VP/TMQ of 2.2/2.2/1 coated at a coverage of about 3229 mg/m$^2$.

The film unit was processed with a processing composition comprised of

| | Weight Percent |
|---|---|
| Sodium hydroxide | 5.0 |
| Titanium dioxide | 50.0 |
| Phenylmercaptotetrazole | 0.1 |
| 6-methyl uracil | 0.5 |
| Carboxymethyl hydroxyethyl cellulose | 3.0 |
| Water to make 100% | |

The negative was exposed (2 meter-candle-seconds) on a sensitometer to a test exposure scale using a xenon light source and then processed by passing the negative together with the image receiving element through a pair of rolles set at a gap spacing of about 50 μm. The film unit was kept intact in the dark for 10 minutes. A well developed dye image was obtained. The neutral density column of the image was read on a densitometer to obtain the Dmax and Dmin values for red, green and blue light respectively.

| | R | G | B |
|---|---|---|---|
| Dmax | 1.27 | 1.30 | 1.24 |
| Dmin | 0.37 | 0.38 | 0.37 |

The reflection spectrum illustrated in Fig. 1 was obtained from an image made using a film unit identical to that described above with the exception that layer 2 of the negative had about 1292 mg/m$^2$ of silver (1.6 μm) and about 861 mg/m$^2$ of gelatin. It can be seen that the black image dye material absorbs generally evenly across the visible spectrum.

Example XVI

A film unit according to the invention was prepared wherein the negative element comprised a transparent subcoated polyester photographic film base having the following layers coated thereon in succession:

1. a polymeric image receiving layer containing about 3229 mg/m$^2$ of (a) 3 parts of a mixture of 2 parts polyvinyl alcohol and 1 part poly-4-vinylpyridine and (b) 1 part of a graft copolymer comprised of 4-vinylpyridine (4VP) and vinyl benzyl trimethyl ammonium chloride (TMQ) grafted onto hydroxyethyl cellulose

(HEC) at a ratio fo HEC/4VP/TMQ of 2.2/2.2/1 and about 54 mg/m² of 1, 4-butanediol diglycidyl ether;

2. a release layer made up of about 323 mg/m² of hydroxyethyl cellulose and about 323 mg/m² of polyethylene wax;

3. a layer comprising about 323 mg/m² of gelatin and about 161 mg/m² of carbon black;

4. a pan sensitive silver iodobromide emulsion layer coated at a coverage of about 1345 mg/m² of silver (1.6 µm) and about 1076 mg/m² of gelatin; and

5. a top coat layer comprising about 323 mg/m² of gelatin and about 27 mg/m² of succindialdehyde.

A second element was prepared having a transparent subcoatd polyester photographic film base on which there was coated a dye layer made up of about 1614 mg/m² of Compound IX and about 1076 mg/m² of gelatin.

The film unit was processed with a processing composition comprised of

| | Weight Percent |
|---|---|
| Potassium hydroxide | 5.0 |
| Phenylmercaptotetrazole | 0.1 |
| Phenidone | 0.4 |
| Zinc nitrate | 3.0 |
| Sodium thiosulfate | 0.1 |
| Carboxymethyl hydroxyethyl cellulose | 3.0 |
| Water to make 100% | |

The negative was exposed to a test exposure scale with white light (2 meter-candle-seconds) and passed, together with the second element, through a pair of rollers at a gap spacing of about 59 µm. The film unit was kept intact in the dark for 5 minutes and then stripped apart at the release layer. A high resolution positive transparency image was obtained in the image receiving layer. The transmission densities to red, green and blue light were read on a transmission densitometer. The results are shown below.

| | R | G | B |
|---|---|---|---|
| Dmax | 0.93 | 1.01 | 0.96 |
| Dmin | 0.03 | 0.03 | 0.05 |

Another transparency was made in the same manner described above with the exception that the processing composition included a 0.2% of phenylmercaptotetrazole and did not include any sodium thiosulfate and the film unit was processed without any light exposure. The image receiving element was then used to determine the dye stability by exposing it, from the image receiving layer side, to the conditions of a Xenon Arc Weatherometer over a period of 33 days. The transparency was periodically removed from the weatherometer and the optical density to red, green and blue, respectively, measured on a densitometer. Fig. 2 graphically illustrates the data obtained as percent dye retained (as a function of optical density) for red, green and blue light. It can be seen that the image dye providing material exhibits excellent light stability. Further it is also evident that the slight fading which did occur is generally similar for the red, green and blue light measurements thus illustrating that the material fades evenly across the visible spectrum.

Example XVII

A film unit according to the invention was prepared wherein the negative element comprised a transparent subcoated polyethylene terephthalate photographic film base having the following layers coated thereon in succession:

1. a dye developer layer comprising about 840 mg/m² of Compound XIII and 538 mg/m² of cellulose acetate hydrogen phthalate;

2. a blue sensitive silver iodobromide emulsion layer coated at a coverage of about 2153 mg/m² of silver (1.6 microns and about 1076 mg/m² of gelatin; and

3. a layer containing about 323 mg/m² of gelatin about 81 mg/m² of 4′-methyl phenyl hydroquinone and about 27 mg/m² of succindialdehyde.

The same image receiving element and processing composition described in Example XV were used. The film unit was processed in the same manner described in Example XV. A well developed image

was obtained. A Dmax = 1.46 and Dmin = 0.60 were obtained with a reflection densitometer using green light.

**Claims**

1. A compound represented by the formula

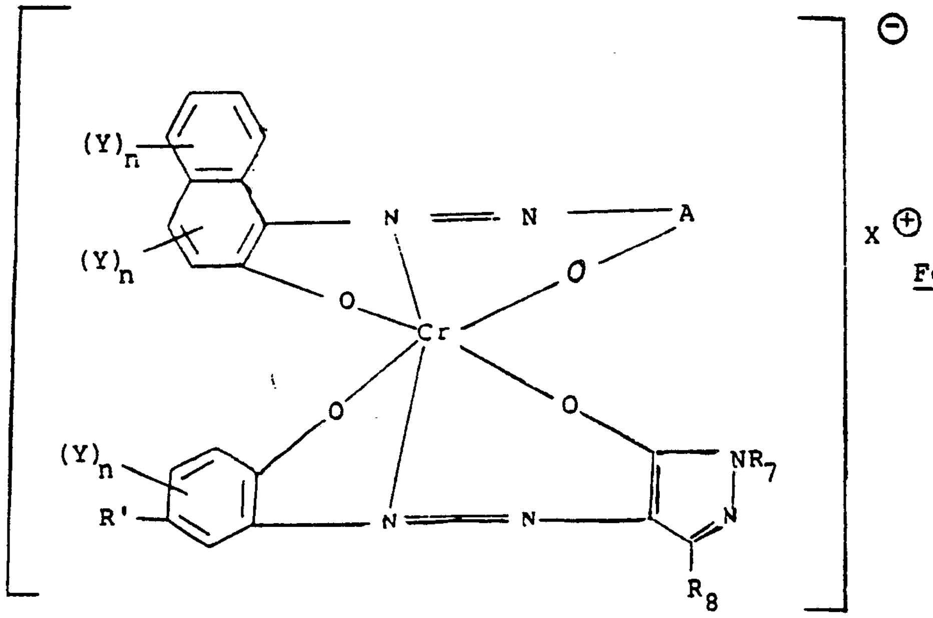

Formula A

wherein A is

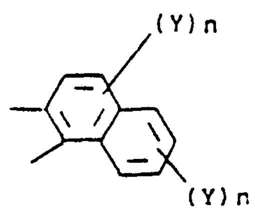

or

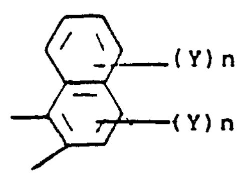

R′ is hydrogen —$NO_2$, —$SO_3H$ or —$SO_2NR''R'''$; R″ and R‴ are the same or different and each is hydrogen, alkyl, phenyl, or alkyl or phenyl substituted with (Y)n; $R_7$ and $R_8$ are the same or different and each is hydrogen, alkyl, phenyl or (Y)n; Y is a substituent including at least one diffusion control moiety, Z, selected from the group consisting of a hydroquinonyl silver halide developing moiety, a coupling phenol or naphthol moiety having an available coupling position para to the hydroxyl group, a sulfonamidophenol group which will cleave or ring close following oxidation and a thiazolidine group which is capable of silver-catalyzed cleavage; n is 0 or 1, provided that at least one n is 1; and X is a cation.

2. A photosensitive element comprising a support, a silver halide emulsion in a layer carried by said support, and an image dye-providing material in a layer carried by said support on the same side thereof as said silver halide emulsion, said image dye-providing material being capable of providing an image dye containing the chromophoric system represented by the formula

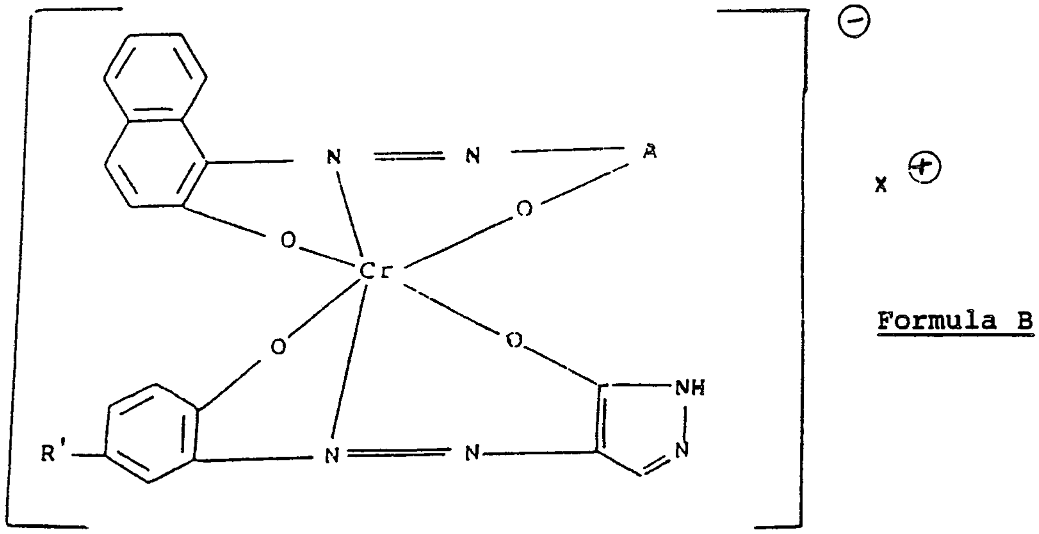

Formula B

wherein A is

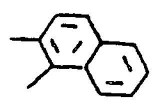 or 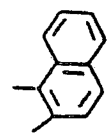

R' is hydrogen, $-NO_2$, $-SO_3H$ or $-SO_2NR''R'''$; R'' and R''' are the same or different and each is hydrogen, alkyl, substituted alkyl, aryl or substituted aryl; and X is a cation.

3. A photosensitive element as defined in Claim 2 wherein said image dye-providing material is capable of providing an image dye containing the chromophoric system represented by the formula

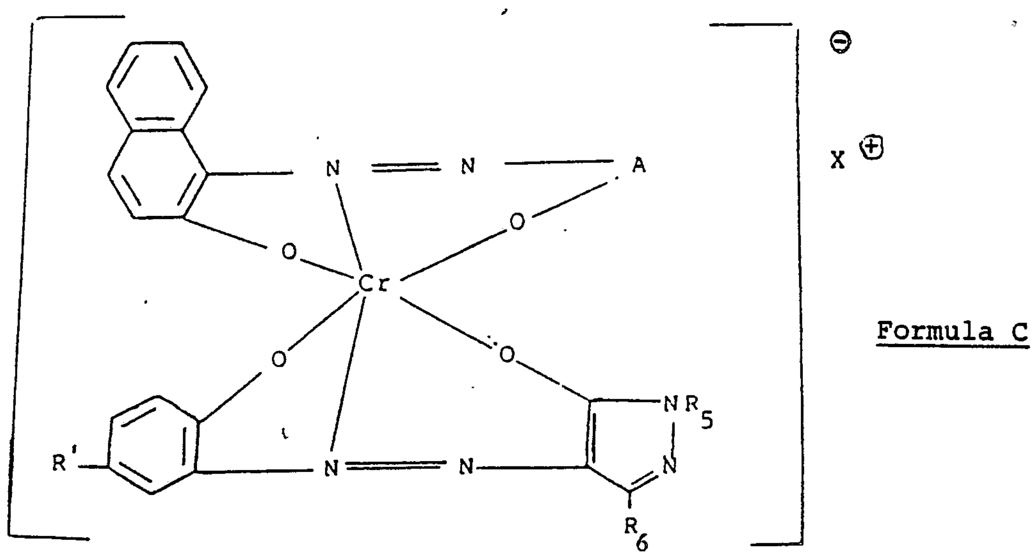

Formula C

wherein $R_5$ and $R_6$ are the same or different and each is hydrogen, alkyl, substituted alkyl, aryl or substituted aryl.

4. A photosensitive element as defined in Claim 2 wherein said image dye-providing material is a compound represented by the formula

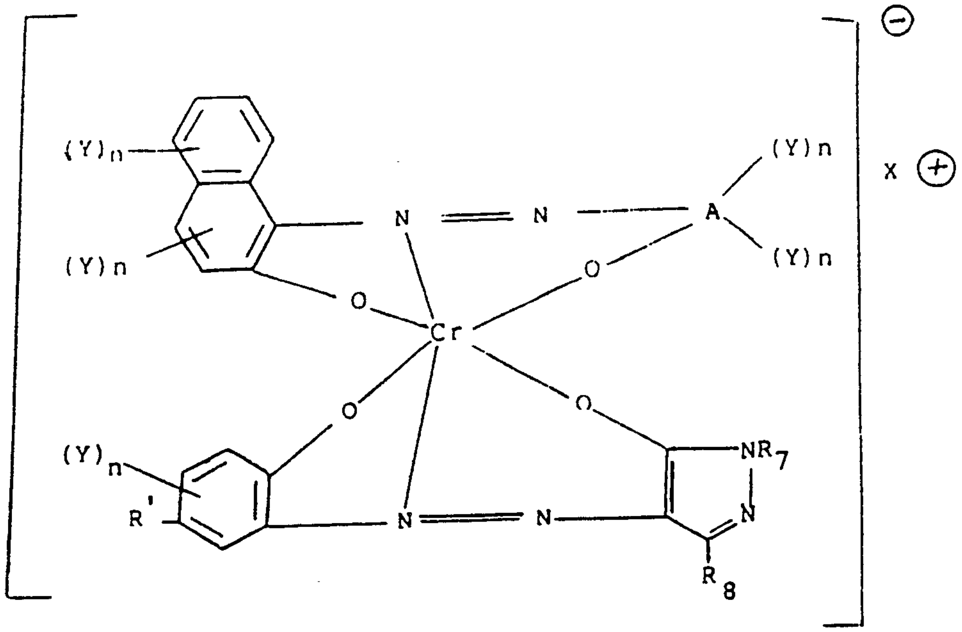

Formula D

wherein $R_7$ and $R_8$ are the same or different and each is hydrogen, alkyl, substituted alkyl, aryl, substituted aryl or (Y)n, Y is a substituent including at least one diffusion control moiety, and n is 0 or 1, provided that at least one n is 1.

5. A photosensitive element as defined in Claim 4 wherein said diffusion control moiety is selected from the group consisting of a hydroquinonyl silver halide developing moiety, a coupling phenol or naphthol moiety having an available coupling position para to the hydroxyl group, a sulfonamidophenol group which will cleave or ring close following oxidation and a thiazolidine group which is capable of silver-catalyzed cleavage.

6. A photosensitive element as defined in Claim 2 wherein R′ is $-NO_2$.

7. A photosensitive element as defined in claim 5, wherein said image dye providing material is represented by the formula

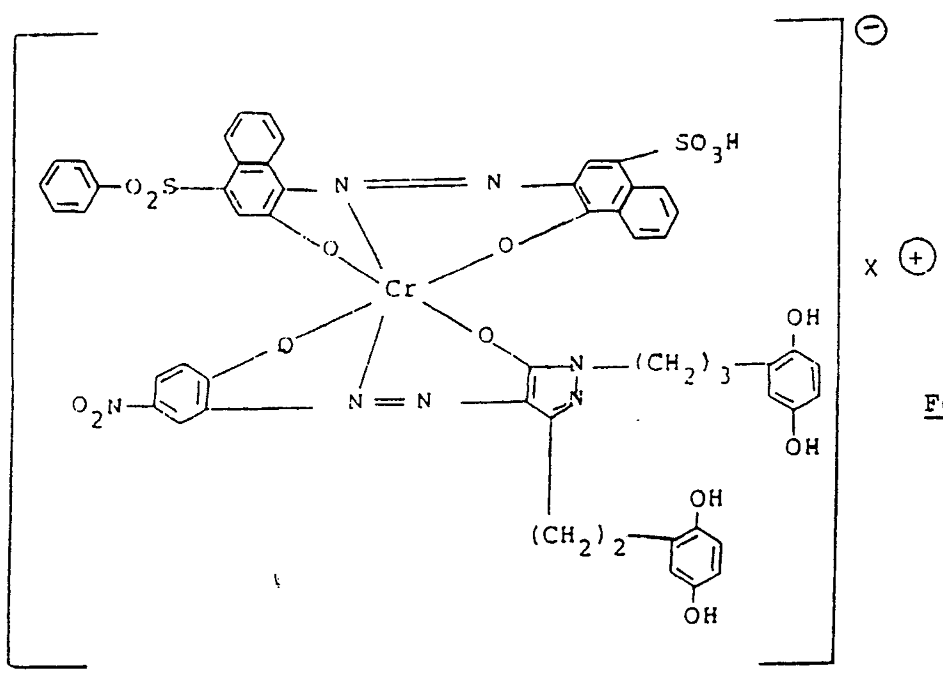

Formula E

where X is a cation.

8. A diffusion transfer film unit comprising

(a) a photosensitive element as defined in Claim 2;

(b) a second sheet-like element adapted to be superposed on said photosensitive element prior to

during or after photoexposure;

(c) an image receiving layer positioned in one of said photosensitive or second sheet-like element; and

(d) a rupturable container releasably holding an aqueous alkaline processing composition and so positioned as to be adapted to distribute said processing composition between predetermined layers and said elements.

9. A diffusion transfer film unit as defined in Claim 8 wherein said image dye-providing material is capable of providing an image dye containing the chromophoric system represented by the formula

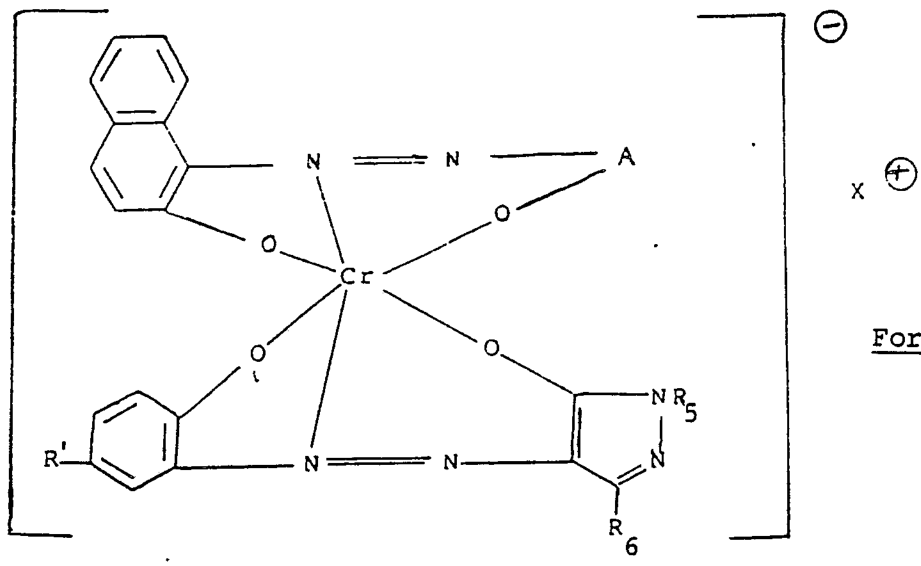

Formula C

wherein $R_5$ and $R_6$ are the same or different and each is hydrogen, alkyl, substituted alkyl, aryl or substituted aryl.

10. A diffusion transfer film unit as defined in Claim 8, wherein said image dye-providing material is a compound represented by the formula

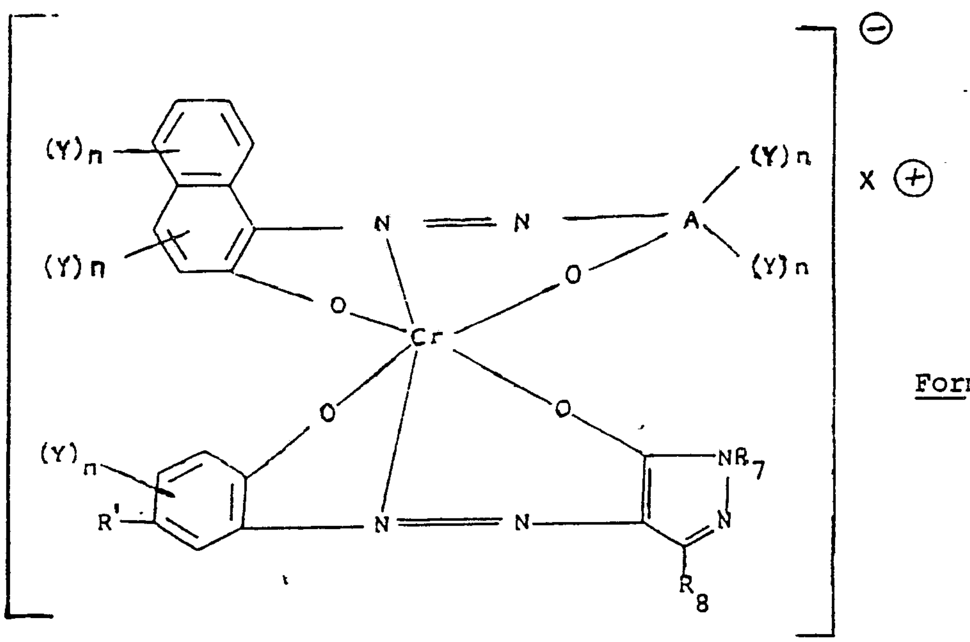

Formula D

wherein $R_7$ and $R_8$ can be the same or different and each is hydrogen, alkyl, substituted alkyl, aryl, substituted aryl or (Y)n, Y is a substituent including at least one diffusion control moiety, and n is 0 or 1, provided that at least one n is 1.

11. A diffusion transfer film unit as defined in Claim 10 wherein said diffusion control moiety is selected from the group consisting of a hydroquinonyl silver halide developing moiety, a coupling phenol or naphthol moiety having an available coupling position para to the hydroxyl group, a sulfonamidophenol group which will cleave or ring close following oxidation and a thiazolidine group which is capable of silver-catalyzed cleavage.

12. A diffusion transfer film unit as defined in Claim 8 wherein R is $-NO_2$.

13. A diffusion transfer film unit as defined in claim 11, wherein said image dye-providing material is represented by the formula

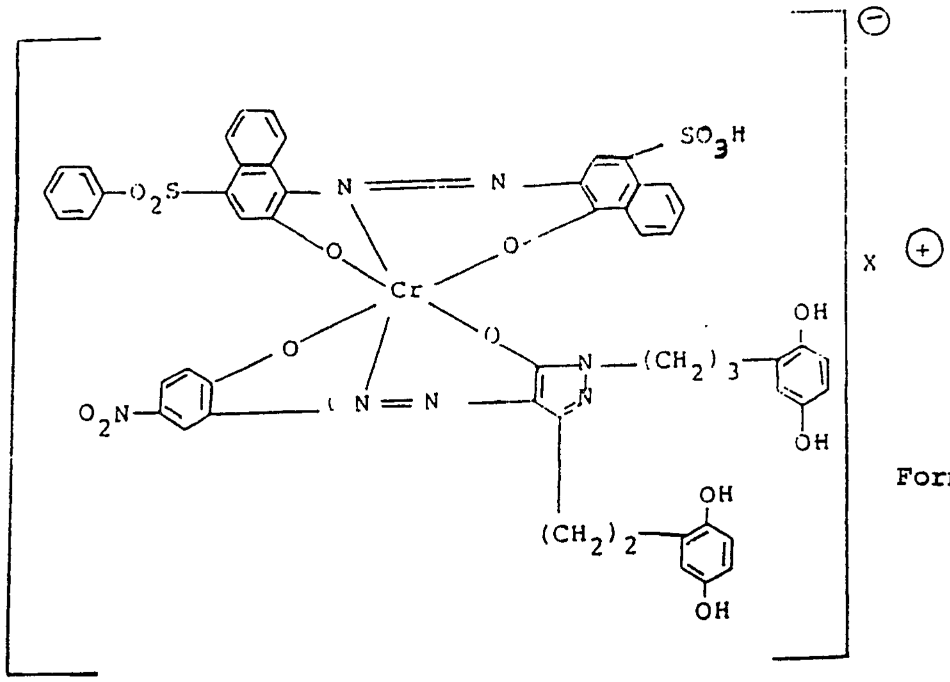

Formula E

where X is a cation.

14. A diffusion transfer process comprising

(a) imagewise exposing a photosensitive element, as defined in claim 2;

(b) developing said exposed photosensitive element with an aqueous alkaline processing composition;

(c) forming an imagewise distribution of said diffusible image dye from said image dye-providing material as a function of development; and

(d) transferring at least a portion of said imagewise distribution of said diffusible image dye to an image receiving layer arranged in superposed relationship with said silver halide emulsion to provide a diffusion transfer dye image.

15. A diffusion transfer process as defined in Claim 14 wherein said image dye-providing material is capable of providing a diffusible image dye containing the chromophoric system represented by the formula

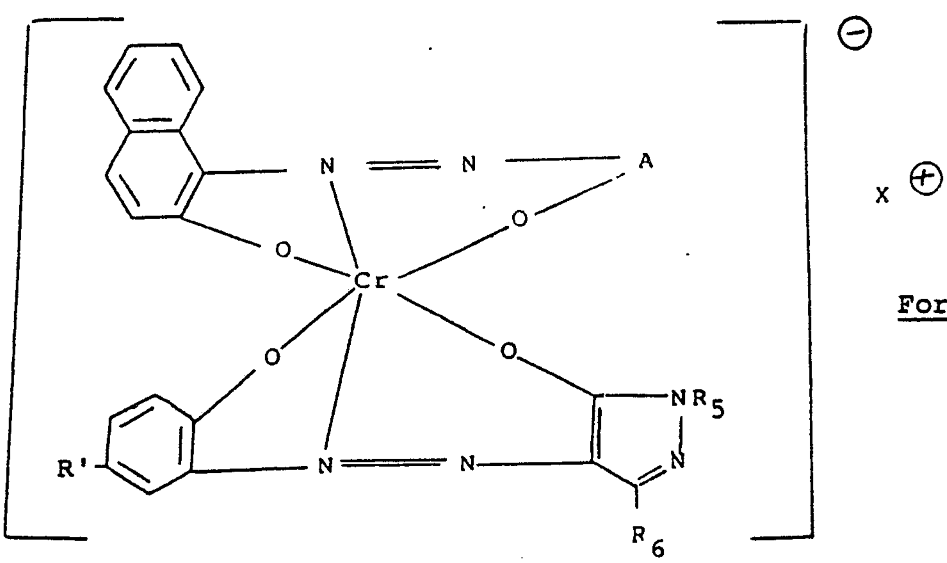

Formula C

wherein $R_5$ and $R_6$ are the same or different and each is hydrogen, alkyl, substituted alkyl, aryl or substituted aryl.

16. A diffusion transfer process as defined in Claim 14 wherein said image dye-providing material is a compound represented by the formula

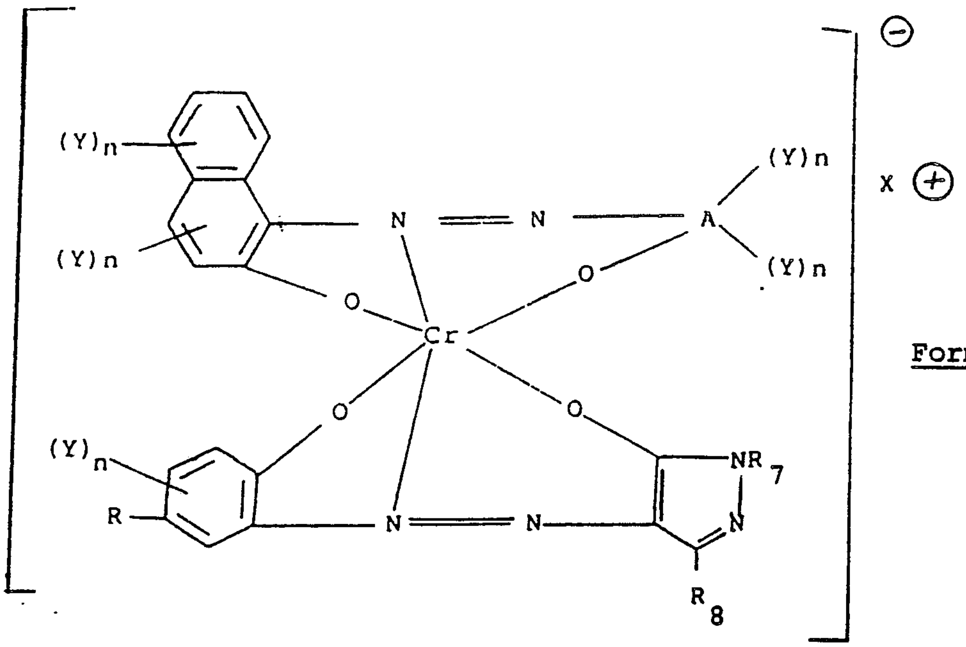

Formula D

wherein $R_7$ and $R_8$ are the same or different and each is hydrogen, alkyl, substituted alkyl, aryl, substituted aryl or (Y)n, Y is a substituent including at least one diffusion control moiety, and n is 0 or 1, provided that at least one n is 1.

17. A diffusion transfer process as defined in Claim 16 wherein said diffusion control moiety is selected from the group consisting of a hydroquinonyl silver halide developing moiety, a coupling phenol or naphthol moiety having an available coupling position para to the hydroxyl group, a sulfonamidophenol group which will cleave or ring close following oxidation and a thiazolidine group which is capable of silver-catalyzed cleavage.

18. A diffusion transfer process as defined in Claim 14 wherein R is $—NO_2$.

**Patentansprüche**

1. Verbindung, dargestellt durch die Formel

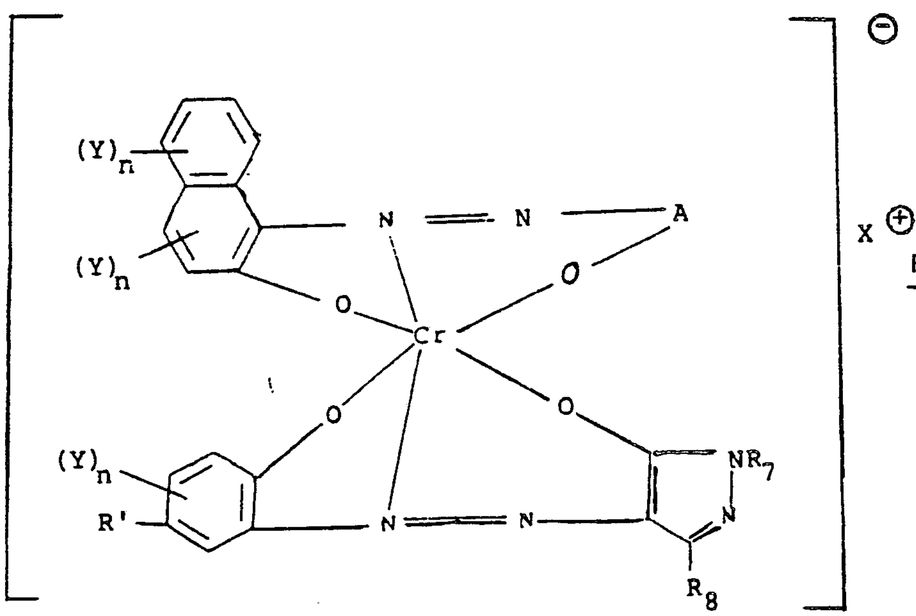

Formel A

worin: A bedeutet

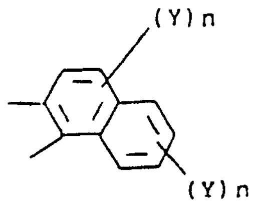

oder

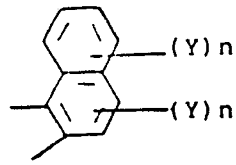

R' bedeutet Wasserstoff, —$NO_2$, —$SO_3H$ oder —$SO_2NR''R'''$; R'' und R''' sind gleich oder verschieden und bedeuten jeweils Wasserstoff, Alkyl, Phenyl oder Alkyl oder Phenyl, das mit (Y)n substituiert ist; $R_7$ und $R_8$ sind gleich oder verschieden und bedeuten jeweils Wasserstoff, Alkyl, Phenyl oder (Y)n; Y bedeutet einen Substituenten, der mindestens eine Gruppierung Z zur Steuerung der Diffusion enthält, wobei diese Gruppierung aus der Gruppe, bestehend aus einer Hydrochinonyl-Silberhalogenid-Entwicklergruppierung, einer kuppelnden Phenol- oder Naphthol-Gruppierung mit einer verfügbaren Kupplungsposition in para-Stellung zur Hydroxylgruppe, einer Sulfonamidophenol-Gruppe, die nach der Oxidation abspaltet oder einen Ring schließt, und einer Thiazolidingruppe, die einer silberkatalysierten Spaltung unterliegt, ausgewählt ist; n bedeutet 0 oder 1, vorausgesetzt, daß mindestens ein n = 1 ist; und X bedeutet ein Kation.

2. Lichtempfindliches Element, enthaltend einen Träger, eine Silberhalogenid-Emulsion in einer Schicht auf dem Träger und ein bildfarbstoffalieferndes Material in einer Schicht auf dem Träger auf derselben Seite wie die Silberhalogenidemulsion, wobei das bildfarbstoffliefernde Material in der Lage ist, einen Bildfarbstoff zur Verfügung zu stellen, der das chromophore System enthält, wie es durch die Formel

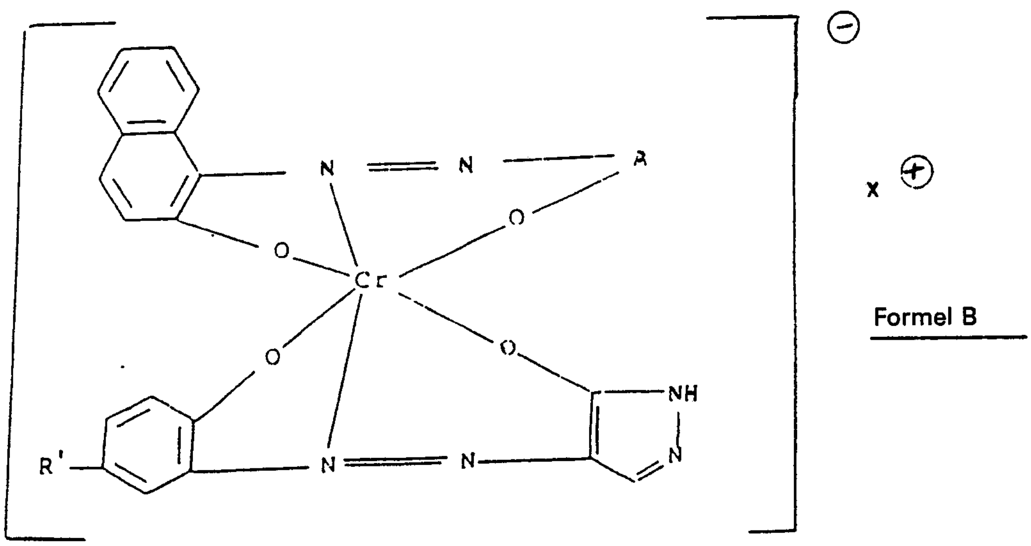

Formel B

dargestellt ist, worin: A bedeutet

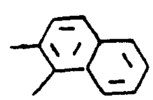

oder

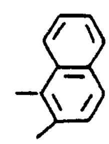

R' bedeutet Wasserstoff, —$NO_2$, —$SO_3H$ oder —$SO_2NR''R'''$; R'' und R''' sind gleich oder verschieden und bedeuten jeweils Wasserstoff, Alkyl, substituiertes Alkyl, Aryl oder substituiertes Aryl; und Z bedeutet ein Kation.

3. Lichtempfindliches Element nach Anspruch 2, worin das bildfarbstoffliefernde Material in der Lage ist, einen Bildfarbstoff zu liefern, der das chromophore System enthält, wie es durch die Formel

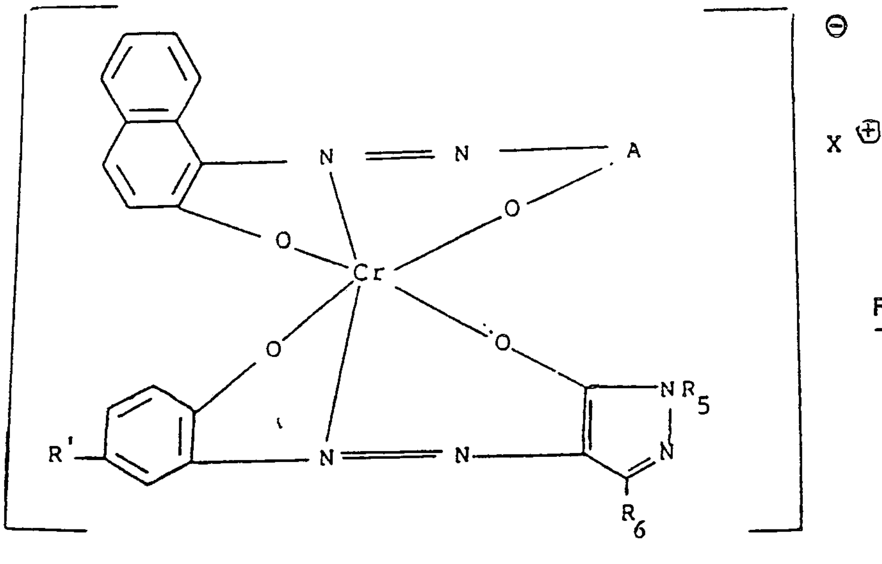

Formel C

dargestellt ist, worin $R_5$ und $R_6$ gleich oder verschieden sind und jeweils Wasserstoff, Alkyl, substituiertes Alkyl, Aryl oder substituiertes Aryl bedeuten.

4. Lichtempfindliches Element nach Anspruch 2, worin das bildfarbstoffliefernde Material eine Verbindung der Formel

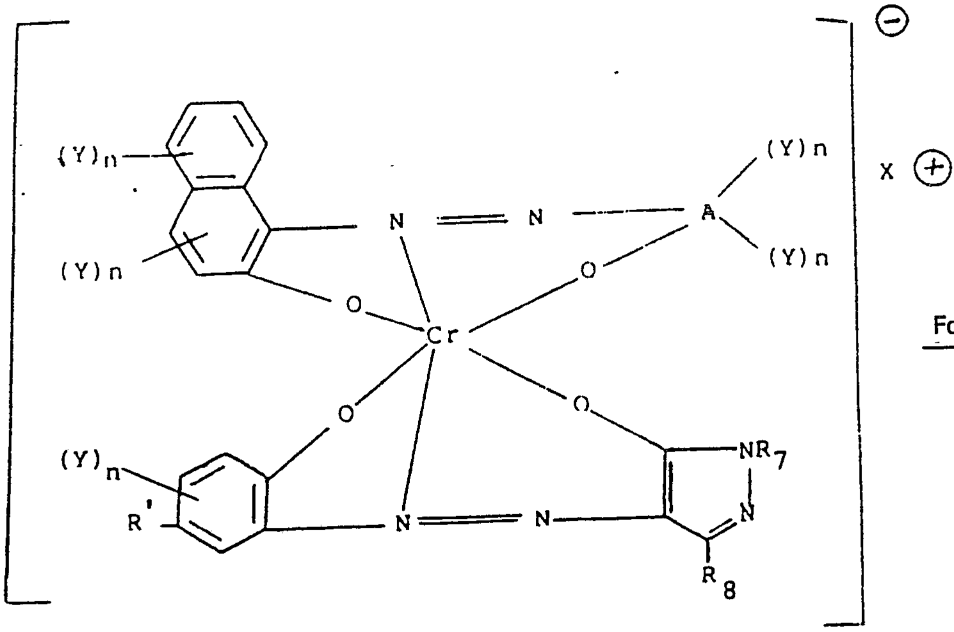

Formel D

darstellt, worin $R_7$ und $R_8$ gleich oder verschieden sind und jeweils Wasserstoff, Alkyl, substituiertes Alkyl, Aryl, substituiertes Aryl oder (Y)n bedeuten, wobei Y einen Substituenten darstellt, der mindestens eine Gruppierung zur Steuerung der Diffusion enthält, und n 0 oder 1 bedeutet, vorausgesetzt, daß mindestens ein n = 1 ist.

5. Lichtempfindliches Element nach Anspruch 4, worin die Gruppierung zur Steuerung der Diffusion aus der Gruppe, bestehend aus einer Hydrochinonyl-Silberhalogenid-Entwicklergruppierung, einer kuppelnden Phenol- oder Naphthol-Gruppierung mit einer verfügbaren Kupplungsposition in para-Stellung zur Hydroxylgruppe, einer Sulfonamidophenylgruppe, die nach der Oxidation spaltet oder einen Ring schließt, und einer Thiazolidingruppe, die einer silberkatalysierten Spaltung unterliegt, ausgewählt ist.

6. Lichtempfindliches Element nach Anspruch 2, worin R' die Gruppe $—NO_2$ bedeutet.

7. Lichtempfindliches Element nach Anspruch 5, worin das bildfarbstoffliefernde Material durch die Formel

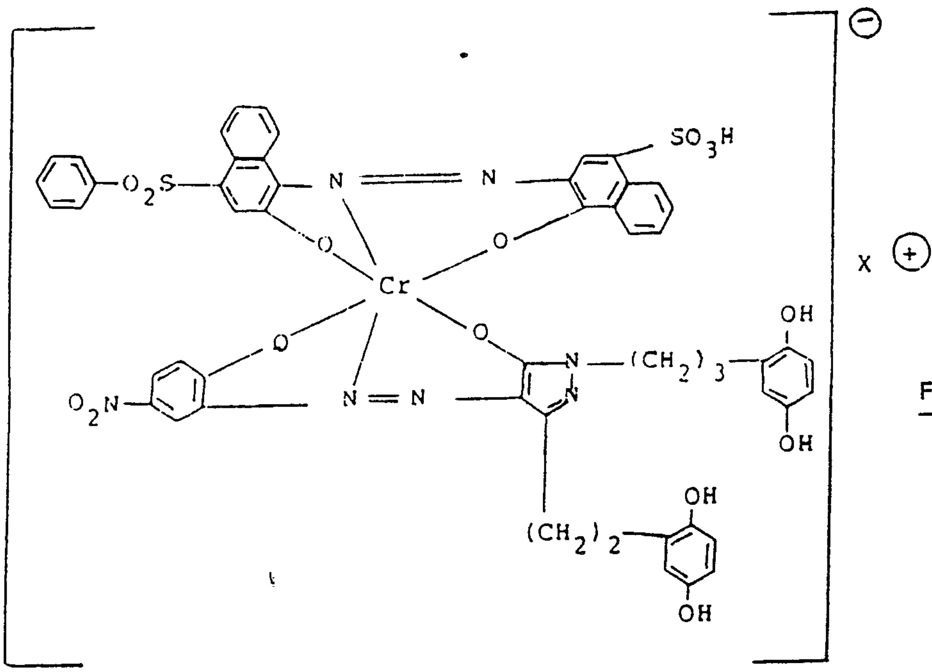

Formel E

dargestellt ist, worin X ein kation bedeutet.

8. Diffusionsübertragungs-Filmeinheit, enthaltend

(a) ein lichtempfindliches Element, wie es in Anspruch 2 definiert ist;

(b) ein zweites, folienartiges Element, das vor oder nach der Belichtung über das lichtempfindliche Element gelegt werden kann;

(c) eine Bildempfangsschicht, die im lichtempfindlichen Element bzw. im zweiten folienartigen Element angeordnet ist; und

(d) einen aufreißbaren Behälter, der eine wäßrig-alkalische Entwicklermasse freisetzbar enthält und so angeordnet ist, daß er die Entwicklermasse zwischen vorherbestimmten Schichten und den genannten Elementen verteilen kann.

9. Diffusionsübertragungs-Filmeinheit nach Anspruch 8, worin das bildfarbstoffliefernde Material in der Lage ist, einen Bildfarbstoff zu liefern, der das chromophore System, wie es durch die Formel

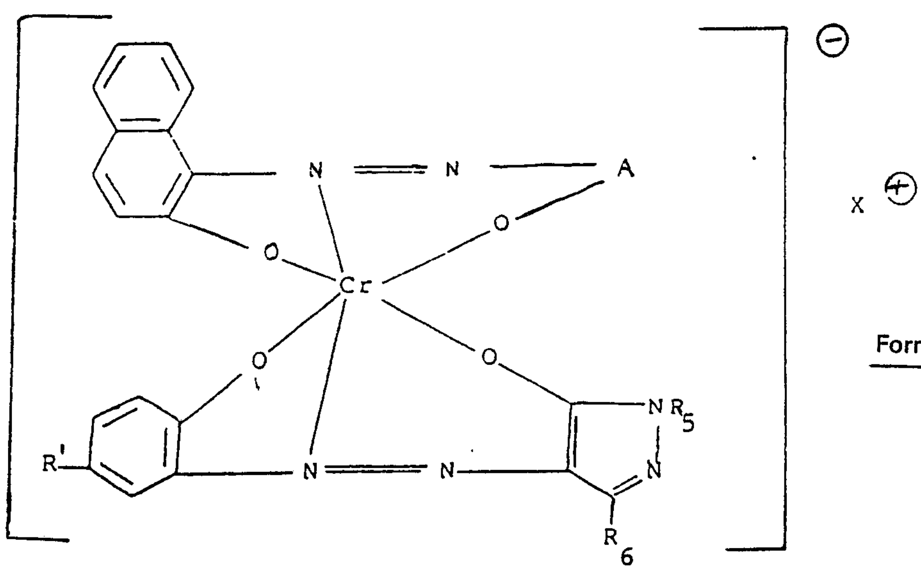

Formel C

dargestellt ist, enthält, worin $R_5$ und $R_6$ gleich oder verschieden sind und jeweils Wasserstoff, Alkyl, substituiertes Alkyl, Aryl oder substituiertes Aryl bedeuten.

10. Diffusionsübertragungs-Filmeinheit nach Anspruch 8, worin das bildfarbstoffliefernde Material eine Verbindung der Formel

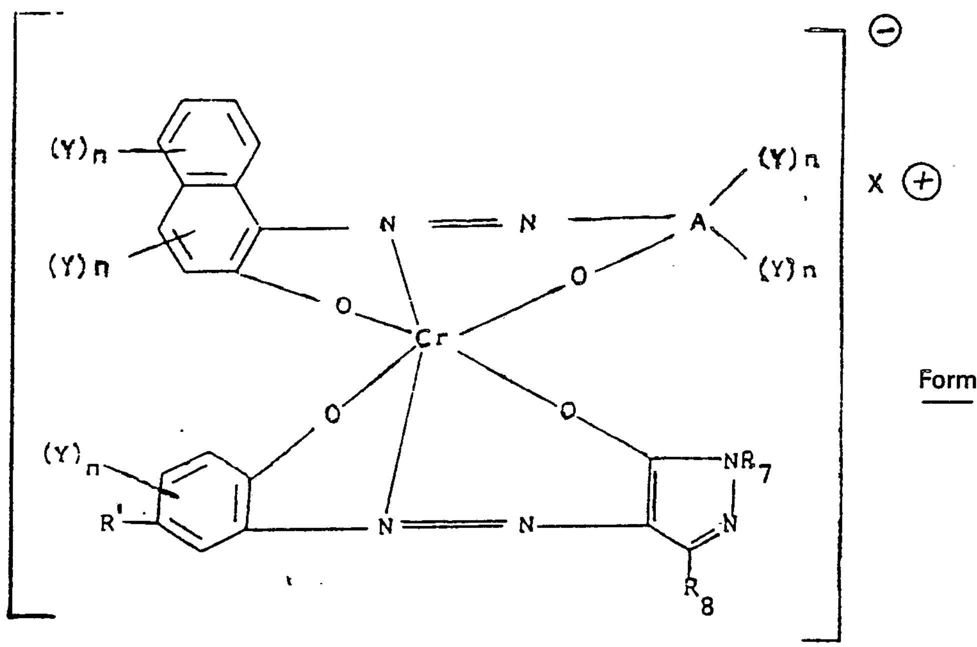

Formel D

darstellt, worin $R_7$ und $R_8$ gleich oder voneinander verschieden sein können und jeweils Wasserstoff, Alkyl, substituiertes Alkyl, substituiertes Aryl oder (Y)n bedeuten, wobei Y ein Substituent ist und mindestens eine Gruppierung zur Steuerung der Diffusion enthält, und n = 0 oder 1 bedeutet, vorausgesetzt, daß mindestens ein n = 1 ist.

11. Diffusionsübertragungs-Filmeinheit nach Anspruch 10, worin jede Gruppierung zur Steuerung der Diffusion aus der Gruppe, bestehend aus einer Hydrochinonyl-Silberhalogenid-Entwicklergruppierung, einer kuppelnden Phenol- oder Naphthol-Gruppierung mit einer verfügbaren Kupplungsposition in para-Stellung zur Hydroxylgruppe, einer Sulfonamidophenylgruppe, die nach der Oxidation spaltet oder einen ring schließt, und einer Thiazolidingruppe, die einer silberkatalysierten Spaltung unterliegt, ausgewählt ist.

12. Diffusionsübertragungs-Filmeinheit nach Anspruch 8, worin R die Gruppe $-NO_2$ bedeutet.

13. Diffusionsübertragungs-Filmeinheit nach Anspruch 11, worin das bildfarbstoffliefernde Material durch die Formel

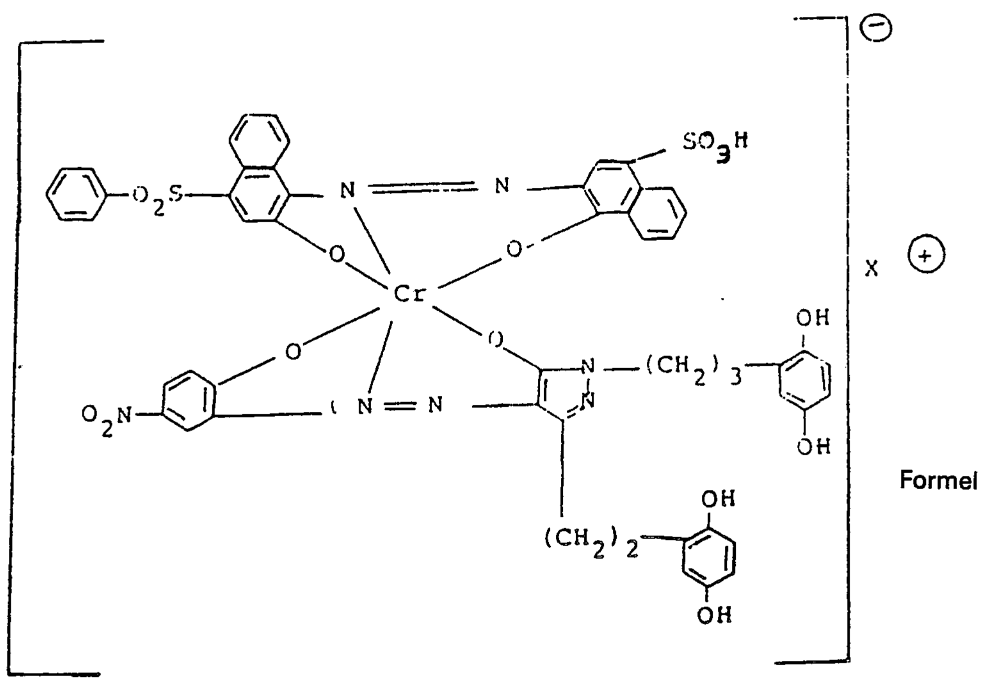

Formel E

dargestellt ist, worin X ein Kation bedeutet.

14. Diffusionsübertragungsverfahren, umfassend

(a) eine bildmäßige Belichtung eines lichtempfindlichen Elements, wie es in Anspruch 2 definiert ist;

(b) Entwicklung des belichteten lichtempfindlichen Elements mit einer wäßrig-alkalischen Entwicklermasse;

(c) Ausbildung einer bildmäßigen Verteilung des diffundierbaren Bildfarbstoffs aus dem bildfarbstoffliefernden Material aus Funktion der Entwicklung und

(d) Übertragung mindestens eines Teils der bildmäßigen Verteilung des diffundierbaren Bildfarbstoffs auf eine Bildempfangsschicht, die über der Silberhalogenidemulsion liegt, um ein Diffusionsübertragungs-Farbstoffbild zu erzeugen.

15. Diffusionsübertragungsverfahren nach Anspruch 14, worin das bildfarbstoffliefernde Material in der Lage ist, einen diffundierbaren Bildfarbstoff zu ergeben, der das chromophore System enthält, wie es durch die Formel

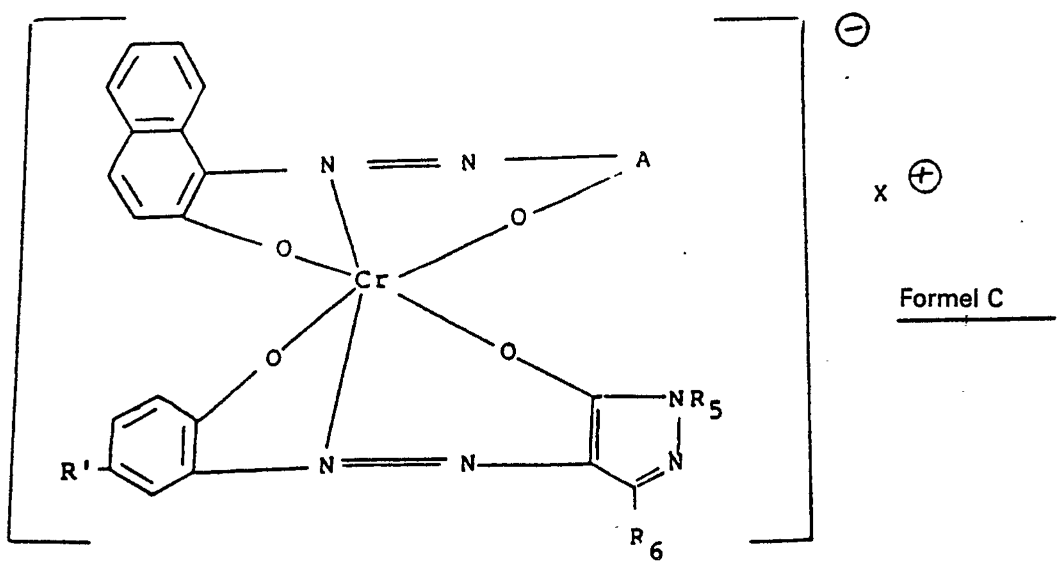

Formel C

dargestellt ist, worin $R_5$ und $R_6$ gleich oder verschieden sind und jeweils Wasserstoff, Alkyl, substituiertes Alkyl, Aryl oder substituiertes Aryl bedeuten.

16. Diffusionsübertragungsverfahren nach Anspruch 14, worin das bildfarbstoffliefernde Material eine Verbindung der Formel

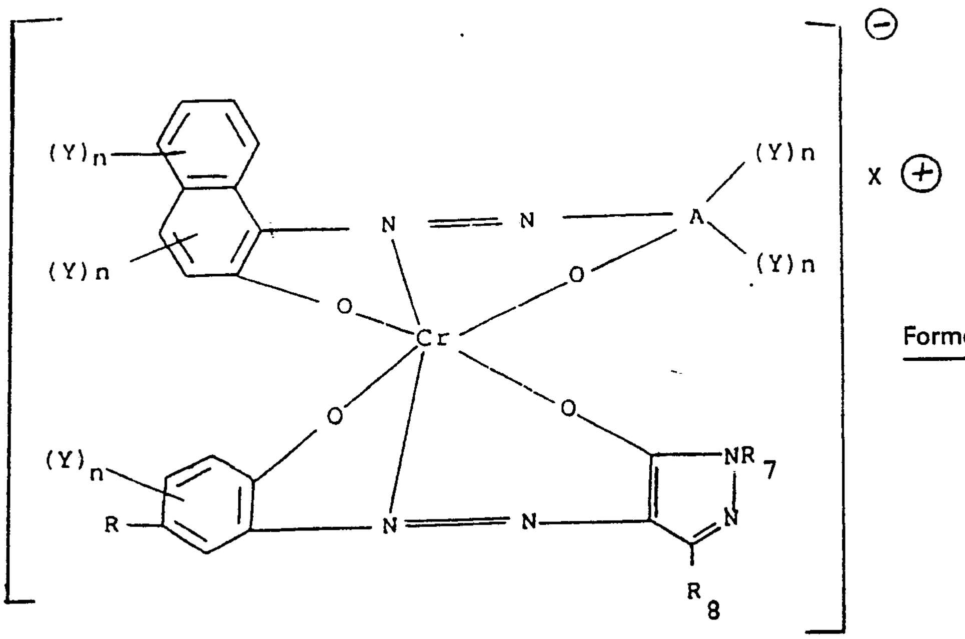

Formel D

darstellt, worin $R_7$ und $R_8$ gleich oder voneinander verschieden sein können und jeweils Wasserstoff, Alkyl, substituiertes Alkyl, substituiertes Aryl oder (Y)n bedeuten, wobei Y ein Substituent ist und mindestens eine Gruppierung zur Steuerung der Diffusion enthält, und n = 0 oder 1 bedeutet, vorausgesetzt, daß mindestens 1 n = 1 ist.

17. Diffusionsübertragungsverfahren nach Anspruch 16, worin die Gruppierung zur Steuerung der Diffusion aus der Gruppe, bestehend aus einer Hydrochinonyl-Silberhalogenid-Entwicklergruppierung, einer kuppelnden Phenol- oder Naphthol-Gruppierung mit einer verfügbaren Kupplungsposition in para-Stellung zur Hydroxylgruppe, einer Sulfonamidophenylgruppe, die nach der Oxidation spaltet oder einen Ring schließt, und einer Thiazolidingruppe, die einer silberkatalysierten Spaltung unterliegt, ausgewählt ist.

18. Diffusionsübertragungsverfahren nach Anspruch 14, worin R die Gruppe $-NO_2$ bedeutet.

## Revendications

1. Un composé représenté par la formule:

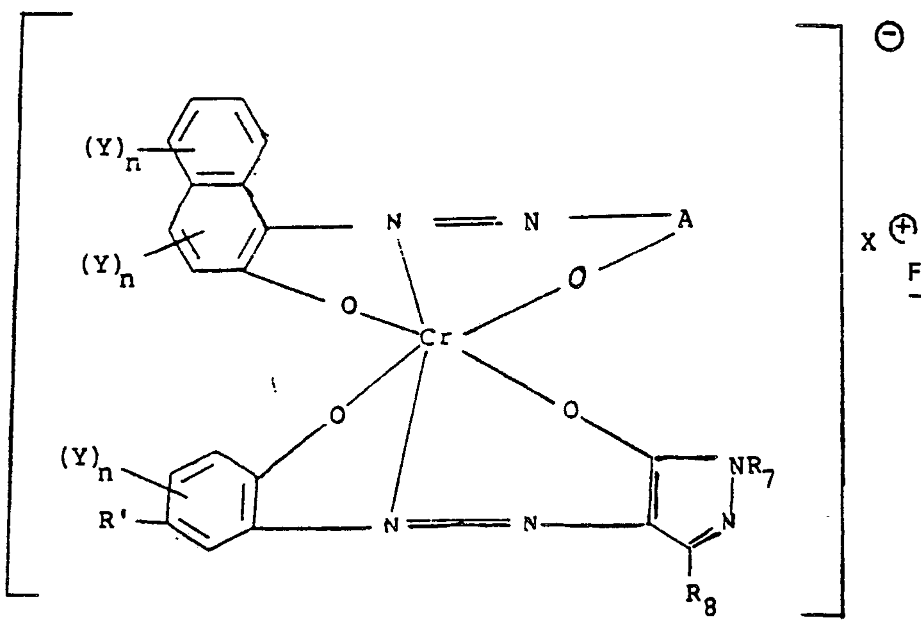

Formule A

dans laquelle A représente:

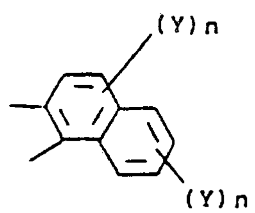

ou

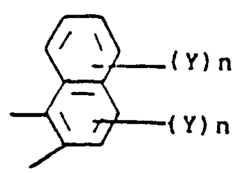

R' représente un hydrogène, $-NO_2$, $-SO_3$ ou $-SO_2NR''R'''$; R'' et R''' sont identiques ou différents et chacun représente un hydrogène, un radical alkyle ou phényle, ou un radical alkyle ou phényle substitué par $(Y)_n$; $R_7$ et $R_8$ sont identiques ou différents et chacun représente un hydrogène, un radical alkyle, un radical phényle ou $(Y)_n$; Y est un substituant comportant au moins un fragment Z de réglage de diffusion, choisi dans l'ensemble constitué par un fragment hydroquinonyle développateur d'halogénure d'argent, un fragment coupleur phénol ou naphtol possédant une position de couplage disponible en para du groupement hydroxyle, un groupement sulfonamidophénol qui se séparera ou se cyclisera après oxydation, et un groupement thiazolidine capable d'une séparation catalysée par l'argent; n est égal à 0 ou à 1, pourvu qu'au moins un des n soit égal à 1, et X est un cation.

2. Un élément photosensible comprenant un support, une émulsion d'halogénure d'argent dans une couche portée par ledit support, et un matériau fournissant un colorant d'image dans une couche portée par ledit support et sur la même face de celui-ci que ladite émulsion d'halogénure d'argent, ledit matériau fournissant un colorant d'image étant capable de donner un colorant d'image contenant le système chromophore représenté par la formule:

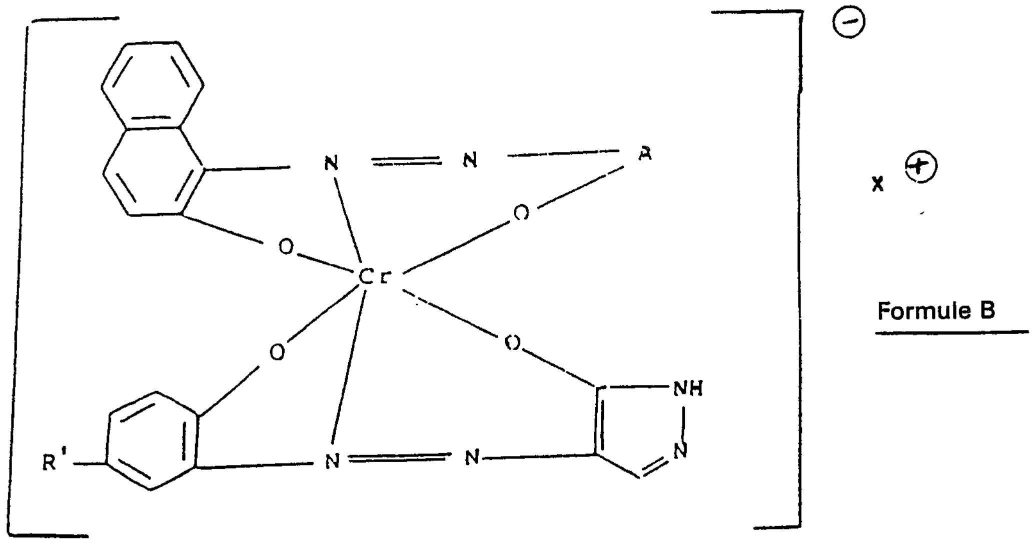

Formule B

dans laquelle A représente:

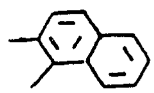 ou 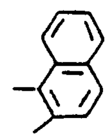

R′ représente un hydrogène, —$NO_2$, —$SO_3H$ ou —$SO_2NR''R'''$, R″ et R‴ sont identiques ou différents et chacun représente un hydrogène ou un radical alkyle, alkyle substitué, aryle ou aryle substitué, et X est un cation.

3. Un élément photosensible tel que défini dans la revendication 2, dans lequel ledit matériau fournissant un colorant d'image est capable de donner un colorant d'image contenant le système chromophore représenté par la formule:

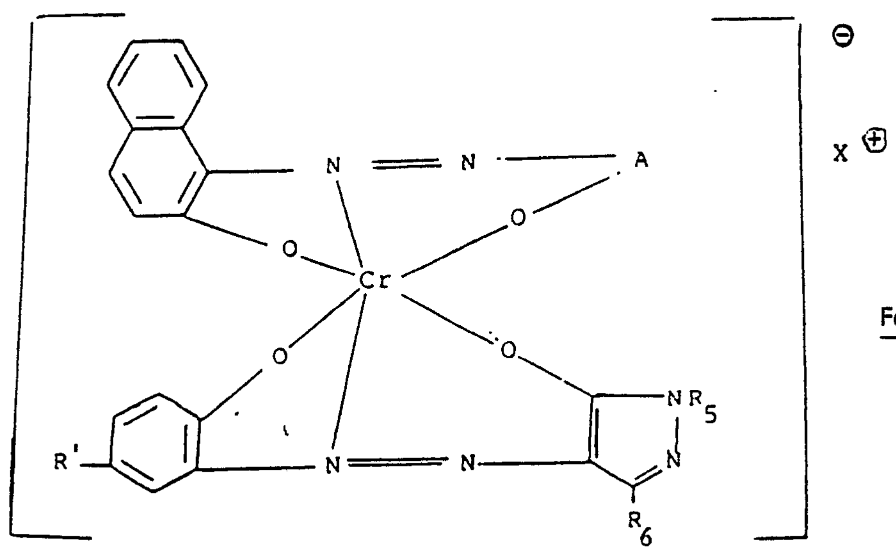

Formule C

dans laquelle $R_5$ et $R_6$ sont identiques ou différents et chacun représente un hydrogène ou un radical alkyle, alkyle substitué, aryle ou aryle substitué.

4. Un élément photosensible tel que défini dans la revendication 2, dans lequel ledit matériau fournissant un colorant d'image est un composé représenté par la formule:

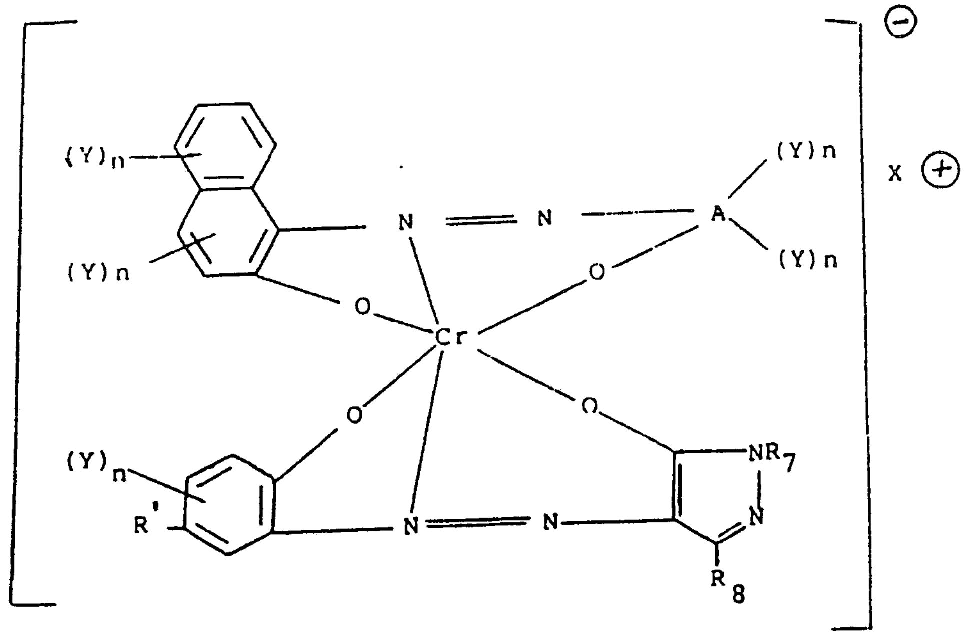

Formule D

dans laquelle $R_7$ et $R_8$ sont identiques ou différents et chacun représente un hydrogène ou un radical alkyle, alkyle substitué, aryle, aryle substitué ou $(Y)_n$, Y est un substituant comportant au moins un fragment de réglage de diffusion, et n est égal à 0 ou à 1, pourvu qu'au moins un des n soit égal à 1.

5. Un élément photosensible tel que défini dans la revendication 4, dans lequel ledit fragment de réglage de diffusion est choisi dans l'ensemble constitué par un fragment hydroquinonyle développateur d'halogénure d'argent, un fragment coupleur phénol ou naphtol possédant une position de couplage disponible en para du groupement hydroxyle, un groupement sulfonamidophénol qui se séparera ou se cyclisera après oxydation, et un groupement thiazolidine capable d'une séparation catalysée par l'argent.

6. Un élément photosensible tel que défini dans la revendication 2, dans lequel R' est $-NO_2$.

7. Un élément photosensible tel que défini dans la revendication 5, dans lequel ledit matériau fournissant un colorant d'image est représenté par la formule:

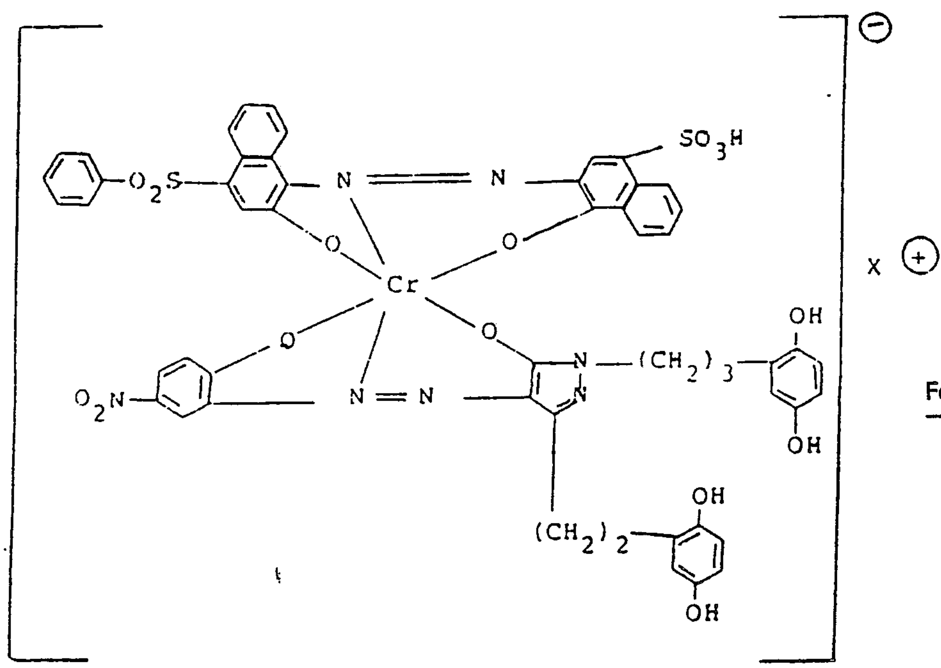

Formule E

où X est un cation.

8. Une unité de film à diffusion-transfert comprenant:

(a) un élément photosensible tel que défini dans la revendication 2,

(b) un second élément en feuillet, adapté pour se superposer audit élément photosensible avant,

pendant ou après photoexposition,

(c) une couche de réception d'image placée dans l'un desdits éléments, l'élément photosensible ou le second élément en feuillet,

(d) un récipient frangible contenant, de façon à pouvoir la libérer, une composition aqueuse alcaline de traitement, placé de façon à distribuer ladite composition de traitement entre les couches prédéterminées et lesdits éléments.

9. Une unité de film à diffusion-transfert telle que définie dans la revendication 8, dans laquelle ledit matériau fournissant un colorant d'image est capable de donner un colorant d'image contenant le système chromophore représenté par la formule:

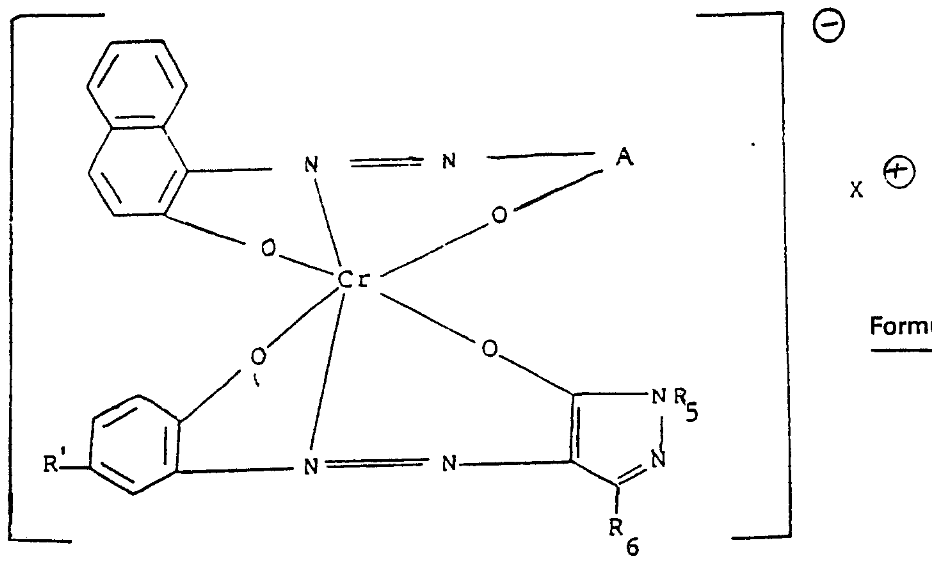

Formule C

dans laquelle $R_5$ et $R_6$ sont identiques ou différents et chacun représente un hydrogène ou un radical alkyle, alkyle substitué, aryle ou aryle substitué.

10. Une unité de film à diffusion-transfert telle que définie dans la revendication 8, dans laquelle ledit matériau fournissant un colorant d'image est un composé représenté par la formule:

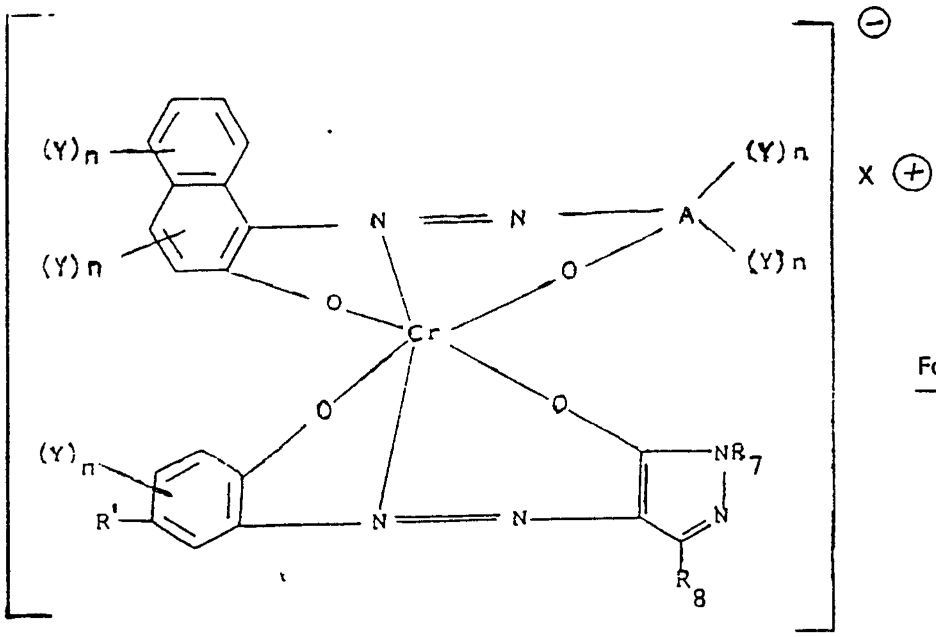

Formule D

dans laquelle $R_7$ et $R_8$ sont identiques ou différents et chacun représente un hydrogène ou un radical alkyle, alkyle substitué, aryle, aryle substitué ou $(Y)_n$, Y est un substituant comportant au moins un fragment de réglage de diffusion, et n est égal à 0 ou à 1, pourvu qu'au moins un des n soit égal à 1.

11. Une unité de film à diffusion-transfert telle que définie dans la revendication 10, dans laquelle ledit

fragment de réglage de diffusion est choisi dans l'ensemble constitué par un fragment hydroquinonyle développateur d'halogénure d'argent, un fragment coupleur phénol ou naphtol possédant une position de couplage disponible en para du groupement hydroxyle, un groupement sulfonamidophénol qui se séparera ou se cyclisera après oxydation, et un groupement thiazolidine capable d'une séparation catalysée par l'argent.

12. Une unité de film à diffusion-transfert telle que définie dans la revendication 8, dans laquelle R est $—NO_2$.

13. Une unité de film à diffusion-transfert telle que définie dans la revendication 11, dans laquelle ledit matériau fournissant un colorant d'image est représenté par la formule:

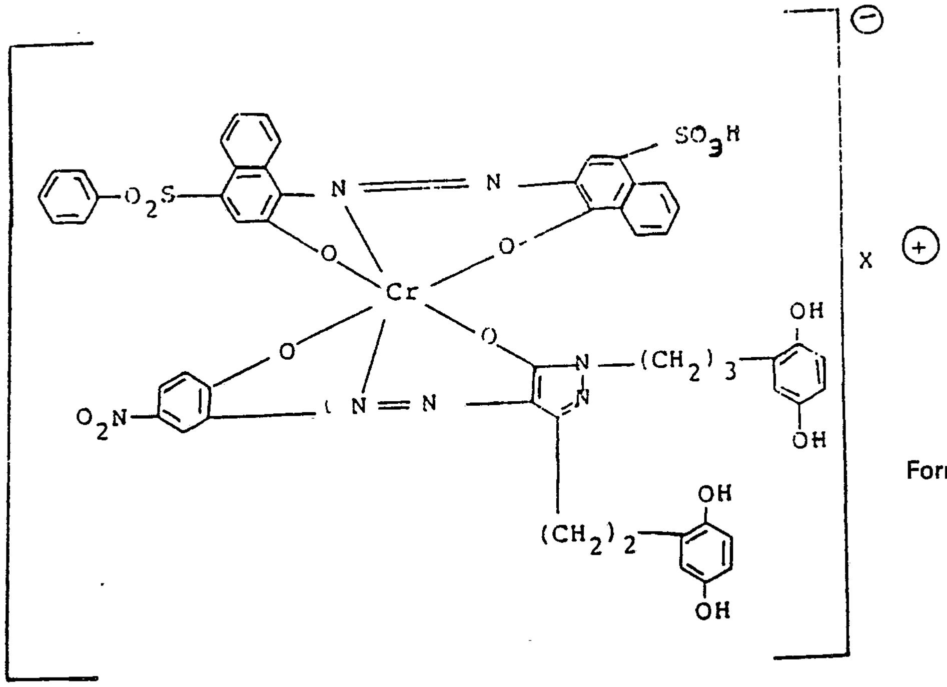

Formule E

où X est un cation.

14. Un procédé à diffusion-transfert comprenant:

(a) l'exposition selon l'image d'un élément photosensible tel que défini dans la revendication 2,

(b) le développement dudit élément photosensible exposé, à l'aide d'une composition aqueuse alcaline de traitement,

(c) l'obtention, en fonction du développement, d'une répartition selon l'image dudit colorant diffusible d'image, à partir dudit matériau fournissant un colorant d'image, et

(d) le transfert d'au moins une partie de ladite répartition selon l'image dudit colorant diffusible d'image dans une couche de réception d'image, juxtaposée en superposition à ladite émulsion d'halogénure d'argent, pour donner une image de colorant par diffusion-transfert.

15. Un procédé à diffusion-transfert tel que défini dans la revendication 14, dans lequel ledit matériau fournissant un colorant d'image est capable de donner un colorant diffusible d'image contenant le système chromophore représenté par la formule:

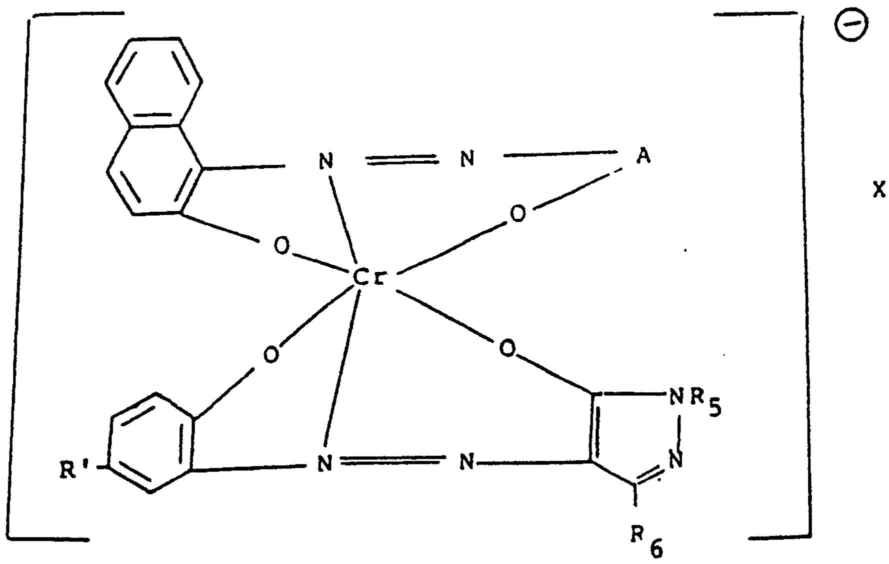

Formule C

dans laquelle $R_5$ et $R_6$ sont identiques ou différents et chacun représente un hydrogène ou un radical alkyle, alkyle substitué, aryle ou aryle substitué.

16. Un procédé à diffusion-transfert tel que défini dans la revendication 14, dans lequel ledit matériau fournissant un colorant d'image est un composé représenté par la formule:

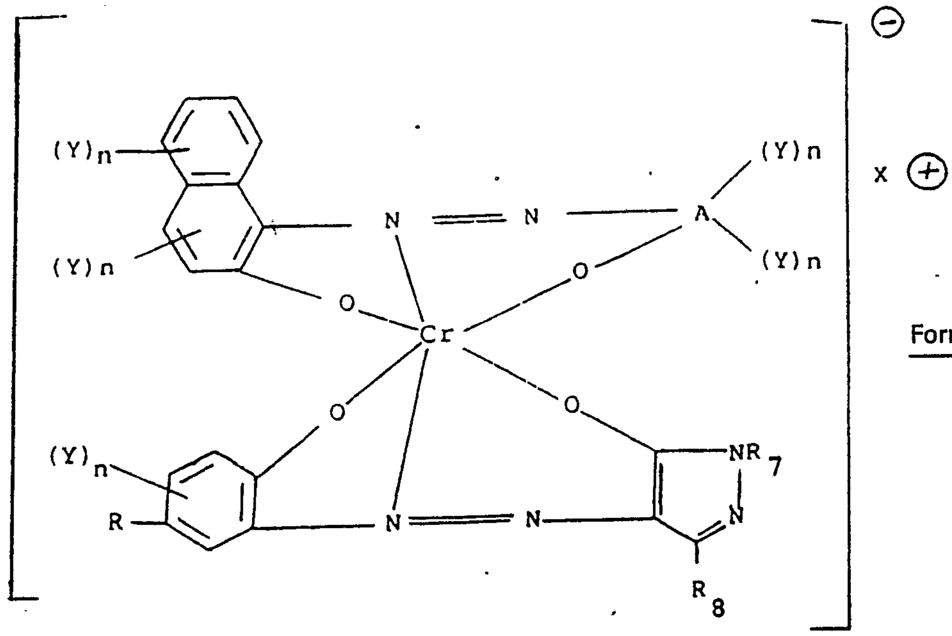

Formule D

dans laquelle $R_7$ et $R_8$ sont identiques ou différents et chacun représente un hydrogène ou un radical alkyle, alkyle substitué, aryle, aryle substitué ou $(Y)_n$, Y est un substituant comportant au moins un fragment de réglage de diffusion, et n est égal à 0 ou à 1, pourvu qu'au moins un des n soit égal à 1.

17. Un procédé à diffusion-transfert tel que défini dans la revendication 16, dans lequel ledit fragment de réglage de diffusion est choisi dans l'ensemble constitué par un fragment hydroquinonyle développateur d'halogénure d'argent, un fragment coupleur phénol ou naphtol possédant une position de couplage disponible en para du groupement hydroxyle, un groupement sulfonamidophénol qui se séparera ou se cyclisera après oxydation, et un groupement thiazolidine capable d'une séparation catalysée par l'argent.

18. Un procédé à diffusion-transfert tel que défini dans la revendication 14, dans lequel R est $—NO_2$.

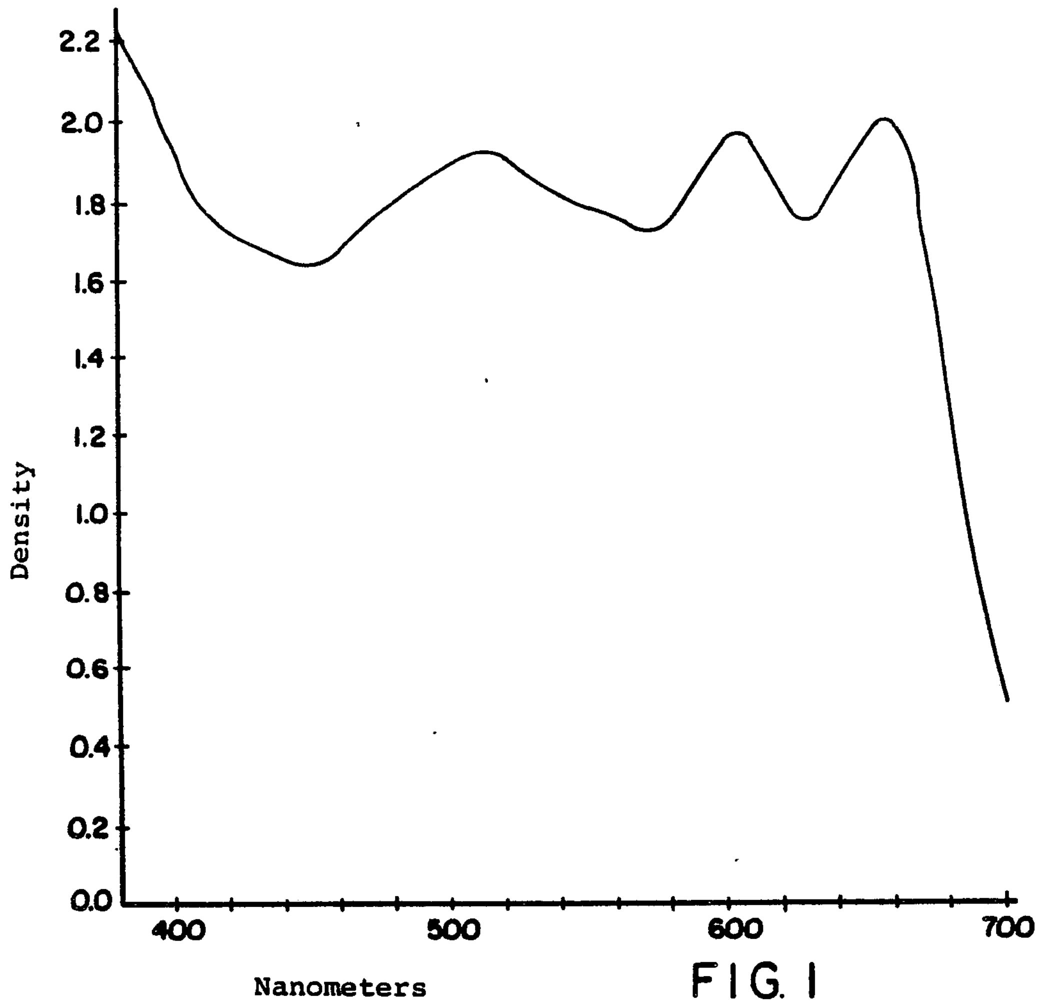
2.2
2.0
1.8
1.6
1.4
1.2
1.0
0.8
0.6
0.4
0.2
0.0
Density
400
500
600
700
Nanometers

FIG. 1

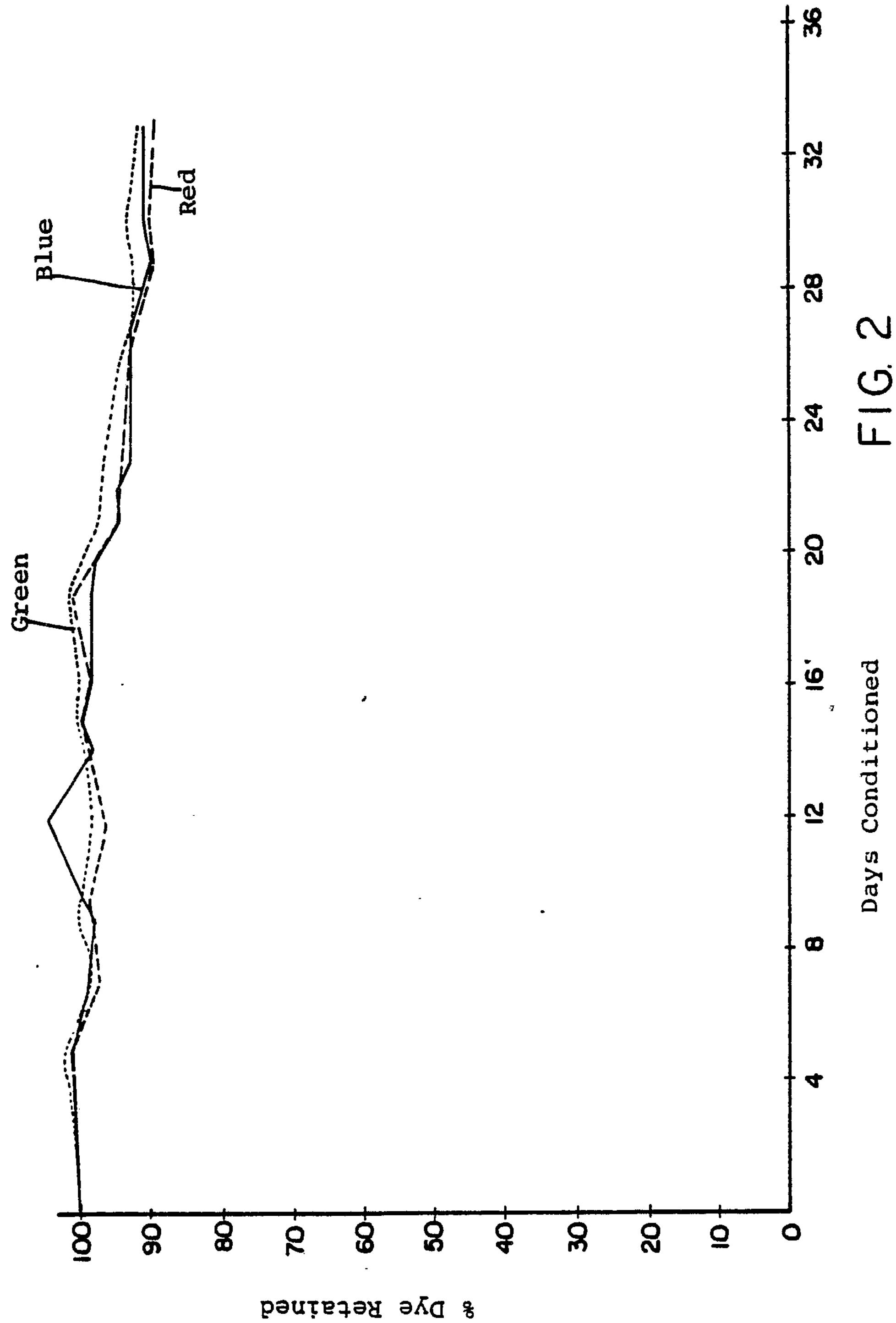
Green
Blue
Red
% Dye Retained
100
90
80
70
60
50
40
30
20
10
0
4
8
12
16
20
24
28
32
36
Days Conditioned

FIG. 2